# EUROPEAN PATENT APPLICATION

(11) **EP 4 694 359 A1**
(43) Date of publication of application: **11.02.2026**
(21) Application number: 24847838.0
(22) Date of filing: 18.06.2024
(51) Int. Cl.: H04W 48/10

(54) **WI-FI PEER-TO-PEER CONNECTION ESTABLISHMENT METHOD AND APPARATUS**

(30) Priority: 02.08.2023 CN 202310972702
(71) Applicant: Huawei Technologies Co., Ltd., Shenzhen, Guangdong 518129 (CN)
(72) Inventor: WANG, Chunfeng, Shenzhen, Guangdong 518129 (CN)
(74) Representative: Maiwald GmbH
(86) International application number: PCT/CN2024/099877
(87) International publication number: WO 2025/025875

(57) **Abstract**

A Wi-Fi peer-to-peer connection establishment method and apparatus are applied to the field of terminal technologies. The method includes: When needing to establish a Wi-Fi peer-to-peer connection to a second electronic device, a first electronic device generates confidential information based on a device master key and first information, and sends a first broadcast message, to notify the second electronic device to establish the Wi-Fi peer-to-peer connection to the first electronic device, where the first information includes time information and/or a connection count of establishing the Wi-Fi peer-to-peer connection between the first electronic device and the second electronic device; the second electronic device sends second information of the second electronic device to the first electronic device based on the first broadcast message; and the first electronic device establishes the Wi-Fi peer-to-peer connection to the second electronic device based on the confidential information, second information of the first electronic device, and the second information of the second electronic device.

## Description

### CROSS-REFERENCE TO RELATED APPLICATIONS

This application claims priority to Chinese Patent Application No. 202310972702.5, filed with the China National Intellectual Property Administration on August 2, 2023 and entitled "WI-FI PEER-TO-PEER CONNECTION ESTABLISHMENT METHOD AND APPARATUS", which is incorporated herein by reference in its entirety.

### TECHNICAL FIELD

This application relates to the field of terminal technologies, and in particular, to a Wi-Fi peer-to-peer connection establishment method and apparatus.

### BACKGROUND

Wi-Fi direct (wireless fidelity direct) is also referred to as Wi-Fi P2P (wireless fidelity peer-to-peer). Wi-Fi P2P allows two Wi-Fi devices to directly connect to and communicate with each other without a Wi-Fi hotspot. A Wi-Fi P2P connection may support interconnection and high-speed data transmission between electronic devices, and is widely used in distributed services (such as data sharing and multicast).

When a Wi-Fi P2P connection is established according to the current standard Wi-Fi direct protocol, long time is required for establishing the Wi-Fi P2P connection, and a requirement of a user quickly transmitting service data by using the Wi-Fi P2P connection cannot be met, causing poor user experience.

### SUMMARY

Embodiments of this application provide a Wi-Fi peer-to-peer connection establishment method and apparatus, to reduce a delay in establishing a Wi-Fi peer-to-peer connection.

According to a first aspect, a Wi-Fi peer-to-peer connection establishment method is provided. The method may be applied to a process of establishing a Wi-Fi peer-to-peer connection between a first electronic device and a second electronic device. On the first electronic device side, the method may include the following steps: determining to establish a Wi-Fi peer-to-peer connection to the second electronic device; generating confidential information based on a device master key and first information, and sending a first broadcast message; receiving second information that is of the second electronic device and that is broadcast by the second electronic device; and establishing the Wi-Fi peer-to-peer connection to the second electronic device based on the confidential information, second information of the first electronic device, and the second information of the second electronic device. The confidential information is used to establish the Wi-Fi peer-to-peer connection, the first information includes time information and/or a connection count of establishing the Wi-Fi peer-to-peer connection between the first electronic device and the second electronic device, and the first broadcast message is used to notify the second electronic device to establish the Wi-Fi peer-to-peer connection to the first electronic device.

In the foregoing implementation, in a process of establishing the Wi-Fi connection between the first electronic device and the second electronic device, no signaling connection of a type such as a Bluetooth connection is established. Therefore, compared with an implementation in which a signaling connection needs to be established and information used to establish the Wi-Fi peer-to-peer connection is transmitted based on the signaling connection, the foregoing implementation of this embodiment of this application can reduce a delay in establishing a signaling connection and exchanging information based on the signaling connection, thereby reducing a delay in establishing the Wi-Fi peer-to-peer connection.

Optionally, a trust relationship exists between the first electronic device and the second electronic device.

In a possible implementation, the first broadcast message includes the second information of the first electronic device.

Optionally, the second information of the first electronic device includes one or more of the following: Wi-Fi peer-to-peer connection status information of the first electronic device, device role information of the first electronic device, station (STA) channel information of the first electronic device, a channel list supported by the first electronic device, dual-band dual-concurrent capability information of the first electronic device, an address network segment of the first electronic device, an IP address of the first electronic device, a type of the first electronic device, and a battery level of the first electronic device.

In a possible implementation, receiving the second information broadcast by the second electronic device includes: receiving a second broadcast message, where the second broadcast message is sent by the second electronic device based on the first broadcast message, and the second broadcast message includes the second information of the second electronic device.

In the foregoing implementation, the second information of the second electronic device may be sent to the first electronic device by using a broadcast message, without establishing a signaling connection and transmitting information by using the signaling connection. Therefore, a delay in establishing the Wi-Fi peer-to-peer connection can be reduced.

Optionally, the second information of the second electronic device includes one or more of the following: Wi-Fi peer-to-peer connection status information of the second electronic device, device role information of the second electronic device, station STA channel information of the second electronic device, indication information of a channel selected by the second electronic device, dual-band dual-concurrent capability information of the second electronic device, an address network segment of the second electronic device, an IP address of the second electronic device, a type of the second electronic device, and a battery level of the second electronic device.

In a possible implementation, the second broadcast message includes indication information, and the indication information indicates that the first electronic device is a group manager device.

In a possible implementation, after receiving the second broadcast message, the method further includes: sending a Wi-Fi peer-to-peer connection establishment request to the second electronic device.

In a possible implementation, receiving the second information of the second electronic device includes: receiving a Wi-Fi peer-to-peer connection establishment request from the second electronic device, where the Wi-Fi peer-to-peer connection establishment request includes the second information of the second electronic device.

In the foregoing implementation, when the second electronic device is a group manager, the second electronic device may not need to send the second broadcast message, but sends the second information of the second electronic device to the first electronic device by using the Wi-Fi peer-to-peer connection establishment request, to directly establish the Wi-Fi peer-to-peer connection to the first electronic device, thereby further reducing a delay in establishing the Wi-Fi peer-to-peer connection.

In a possible implementation, sending the first broadcast message includes: generating a first verification code based on the device master key and the connection count; and sending the first broadcast message, where the first broadcast message includes the first verification code.

In the foregoing implementation, the first electronic device generates the first verification code, and sends the first verification code to the second electronic device by using the first broadcast message, so that the second electronic device verifies the verification code, to improve security.

In a possible implementation, the confidential information includes a pre-shared key (PSK) and a service set identifier (SSID).

According to a second aspect, a Wi-Fi peer-to-peer connection establishment method is provided. The method may be applied to a process of establishing a Wi-Fi peer-to-peer connection between a first electronic device and a second electronic device. On the second electronic device side, the method may include the following steps: receiving a first broadcast message, where the first broadcast message is used to notify the second electronic device to establish a Wi-Fi peer-to-peer connection to the first electronic device, and the first broadcast message includes second information of the first electronic device; generating confidential information based on a device master key and first information, where the confidential information is used to establish the Wi-Fi peer-to-peer connection, and the first information includes time information and/or a connection count of establishing the Wi-Fi peer-to-peer connection between the first electronic device and the second electronic device; and establishing the Wi-Fi peer-to-peer connection to the first electronic device based on the confidential information, second information of the second electronic device, and the second information of the first electronic device.

In a possible implementation, the second information of the first electronic device includes one or more of the following: Wi-Fi peer-to-peer connection status information of the first electronic device, device role information of the first electronic device, station STA channel information of the first electronic device, a channel list supported by the first electronic device, dual-band dual-concurrent capability information of the first electronic device, an address network segment of the first electronic device, an IP address of the first electronic device, a type of the first electronic device, and a battery level of the first electronic device.

In a possible implementation, after receiving the first broadcast message, the method further includes: sending a second broadcast message, where the second broadcast message includes the second information of the second electronic device.

In a possible implementation, the second information of the second electronic device includes one or more of the following: Wi-Fi peer-to-peer connection status information of the second electronic device, device role information of the second electronic device, STA channel information of the second electronic device, indication information of a channel selected by the second electronic device, dual-band dual-concurrent capability information of the second electronic device, an address network segment of the second electronic device, an IP address of the second electronic device, a type of the second electronic device, and a battery level of the second electronic device.

In a possible implementation, the second broadcast message includes indication information, and the indication information indicates that the first electronic device is a group manager device.

In a possible implementation, after sending the second broadcast message, the method further includes: receiving a Wi-Fi peer-to-peer connection establishment request sent by the first electronic device.

In a possible implementation, after generating the confidential information based on the device master key and the first information, the method further includes: sending a Wi-Fi peer-to-peer connection establishment request to the first electronic device, where the Wi-Fi peer-to-peer connection establishment request includes the second information of the second electronic device.

In a possible implementation, the first broadcast message includes a first verification code generated by the first electronic device; and before generating the confidential information based on the device master key and the first information, the method further includes: generating a second verification code based on the device master key and the connection count; and succeeding in verifying the first electronic device based on the first verification code and the second verification code.

In a possible implementation, the confidential information includes a PSK and an SSID.

According to a third aspect, a communication apparatus is provided. The communication apparatus includes a unit or a module configured to perform the method according to any one of the first aspect, or includes a unit or a module configured to perform the method according to any one of the second aspect.

According to a fourth aspect, a communication apparatus is provided. The communication apparatus includes one or more processors and one or more memories, the one or more memories store one or more programs, and when the program is executed by the one or more processors, the apparatus is enabled to perform the method according to any one of the first aspect, or perform the method according to any one of the second aspect.

According to a fifth aspect, a readable storage medium is provided, including a computer program. When the computer program is run on an apparatus, the apparatus is enabled to perform the method according to any one of the first aspect, or perform the method according to any one of the second aspect.

According to a sixth aspect, a computer program product is provided. When the computer program product is run on an apparatus, the apparatus is enabled to perform the method according to any one of the first aspect, or perform the method according to any one of the second aspect.

According to a seventh aspect, a chip system is provided, including a processor. After the processor invokes a computer program from a memory and runs the computer program, an apparatus on which the chip system is installed is enabled to perform the method according to any one of the first aspect, or perform the method according to any one of the second aspect.

### BRIEF DESCRIPTION OF DRAWINGS

FIG. 1 shows a network system architecture to which an embodiment of this application is applicable;
FIG. 2 is a diagram of a Wi-Fi P2P connection establishment procedure according to an embodiment of this application;
FIG. 3 is a diagram of a framework for implementing a distributed service based on a Wi-Fi P2P connection according to an embodiment of this application;
FIG. 4A and FIG. 4B are a diagram of a procedure for implementing a distributed service based on a Wi-Fi P2P connection according to an embodiment of this application;
FIG. 5A and FIG. 5B are a diagram of a structure of an electronic device according to an embodiment of this application;
FIG. 6 is a diagram of another Wi-Fi peer-to-peer connection establishment procedure according to an embodiment of this application;
FIG. 7a to FIG. 7d are a diagram of a user interface for triggering, by a user, a mobile phone to establish a Wi-Fi P2P connection to a large-screen device according to an embodiment of this application;
FIG. 8a to FIG. 8c are another diagram of a user interface for triggering, by a user, a mobile phone to establish a Wi-Fi P2P connection to a large-screen device according to an embodiment of this application;
FIG. 9A and FIG. 9B are a diagram of a signaling interaction procedure for establishing a Wi-Fi peer-to-peer connection according to an embodiment of this application; and
FIG. 10 is a diagram of a structure of a communication apparatus according to an embodiment of this application.

### DESCRIPTION OF EMBODIMENTS

The following clearly and completely describes the technical solutions in embodiments of this application with reference to the accompanying drawings in embodiments of this application. Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly. It should be further understood that, in embodiments of this application, "one or more" means one, two, or more, and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

"A plurality of" in embodiments of this application means "greater than or equal to two". It should be noted that in the descriptions of embodiments of this application, the terms such as "first" and "second" are merely intended for distinction in description, but should not be construed as indicating or implying relative importance or indicating or implying a sequence.

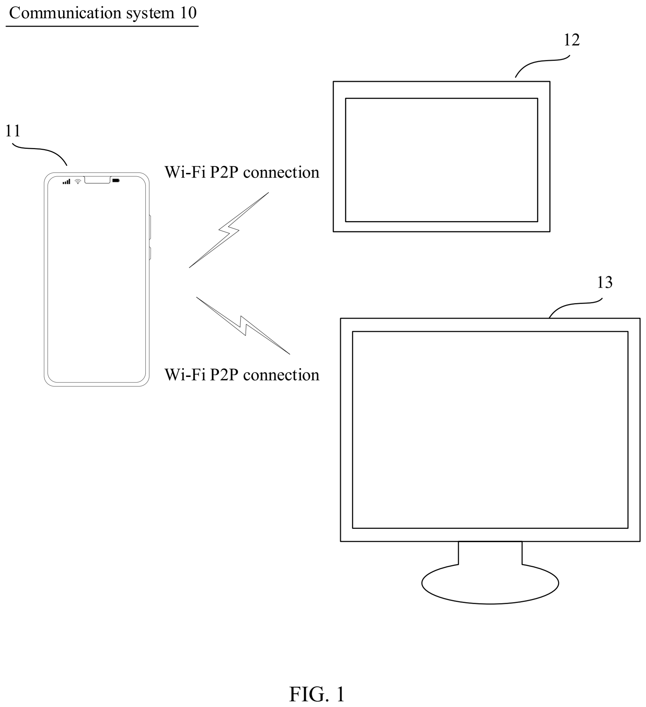

In some example embodiments, refer to FIG. 1. FIG. 1 is a diagram of a communication system to which an embodiment of this application is applicable.

As shown in FIG. 1, the communication system 10 may include various electronic devices, for example, a mobile phone 11, a tablet computer 12, and a large-screen device 13. A type of the electronic device (for example, the mobile phone 11, the tablet computer 12, or the large-screen device 13) is not specifically limited in this embodiment of this application. The communication system 10 may further include another device, for example, an internet of things (internet of things, IOT) device such as a smart home device, which is not shown in FIG. 1.

For example, the electronic device in this embodiment of this application may be a device such as a mobile phone, a wearable device (such as a smart band, a smart watch, or a headset), a tablet computer, a handheld computer, a netbook, a laptop computer (laptop), a handheld computer, a notebook computer, an ultra-mobile personal computer (ultra-mobile personal computer, UMPC), a cellular phone, a personal digital assistant (personal digital assistant, PDA), or an augmented reality (augmented reality, AR)/virtual reality (virtual reality, VR) device, or may be a device such as a television, a large screen, a speaker, a refrigerator, an air conditioner, a vehicle-mounted device (which may also be referred to as an in-vehicle infotainment system), a printer, or a projector. An example embodiment of the electronic device includes but is not limited to a device running iOS^{®}, Android^{®}, Microsoft^{®}, Harmony^{®}, or another operating system.

The electronic devices in the communication system 10 may form near field communication networking by using a Wi-Fi peer-to-peer connection. A specific example of the Wi-Fi peer-to-peer connection may be an HML (Huawei Magneto Link, Huawei magneto link) or AWDL (Apple Wireless Direct Link, Apple wireless direct link) connection. A specific type of the Wi-Fi peer-to-peer connection is not limited in this embodiment of this application. Optionally, an operating frequency band of the Wi-Fi peer-to-peer connection may be a 2.4 GHz frequency band or a 5 GHz frequency band.

After the Wi-Fi peer-to-peer connection is established between a plurality of (two or more) electronic devices, the plurality of (two or more) electronic devices become electronic devices in soft bus networking. The soft bus networking may include a homogeneous network and a heterogeneous network. For example, if an electronic device in a communication network performs communication by using a Wi-Fi peer-to-peer connection, the communication network is a homogeneous network. In the soft bus networking, different electronic devices may execute respective services, or services may be distributed and executed on different electronic devices. For example, the electronic devices shown in FIG. 1 form soft bus networking. The mobile phone 11 may synchronize, through screen projection by using the Wi-Fi peer-to-peer connection, a video played by the mobile phone 11 to the large-screen device 13 for playing. The mobile phone 11 may further transmit a photo stored on the mobile phone 11 to the tablet computer 12 by using the Wi-Fi peer-to-peer connection, to implement file sharing.

In some embodiments, a trust relationship may be established between different electronic devices in the soft bus networking, to implement a distributed service. The trust relationship may be established in a discovery (discovery) phase of a Wi-Fi peer-to-peer connection initialization process. Optionally, the trust relationship between the electronic devices may be established based on a common account. For example, if the mobile phone 101 and the tablet computer 12 log in to a same account, the mobile phone 11 may be directly bound to the tablet computer 12 to establish a trust relationship. For example, a binding button corresponding to the tablet computer 12 is directly tapped on the mobile phone 11, without waiting for confirmation from the tablet computer 12. The trust relationship between the electronic devices may alternatively be established based on an associated account.

A plurality of electronic devices that have a trust relationship in the soft bus networking may be referred to as "super terminals". For example, in the architecture shown in FIG. 1, the mobile phone 11, the tablet computer 12, and the large-screen device 13 all log in to a same account, to establish a trust relationship. Therefore, the mobile phone 11, the tablet computer 12, and the large-screen device 13 become "super terminals".

The electronic device in the architecture shown in FIG. 1 supports the Wi-Fi peer-to-peer connection and a capability of implementing the distributed service based on the Wi-Fi peer-to-peer connection. In this embodiment of this application, "electronic device", "P2P device", and "terminal device" may be replaced with each other. In addition, "distributed service" and "P2P service" may be replaced with each other.

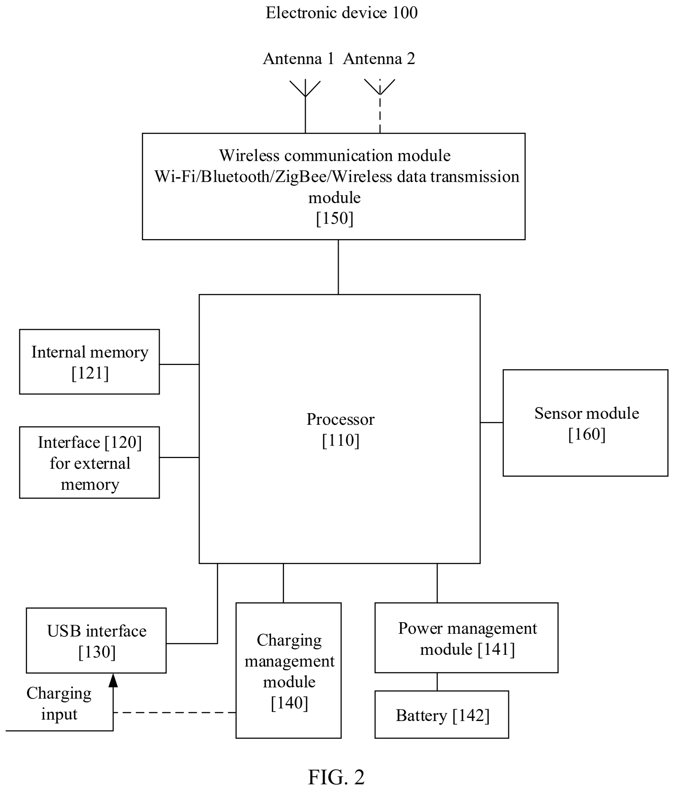

Refer to FIG. 2. FIG. 2 is an example diagram of a hardware structure of an electronic device according to an embodiment of this application. The electronic device may be the mobile phone 11, the tablet computer 12, or the large-screen device 13 in the architecture shown in FIG. 1, or another electronic device that can be used in the foregoing architecture.

As shown in FIG. 2, the electronic device 100 may include a processor 110, an interface 120 for an external memory, an internal memory 121, a universal serial bus (universal serial bus, USB) interface 130, a charging management module 140, a power management module 141, a battery 142, an antenna 1, an antenna 2, a wireless communication module 150, a sensor module 160, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. In some embodiments, the electronic device 100 may alternatively include one or more processors 110. The controller may generate an operation control signal based on instruction operation code and a time sequence signal, to complete control of instruction fetching and instruction execution.

In some embodiments, the processor 110 may include one or more interfaces. The interface may include an inter-integrated circuit (inter-integrated circuit, I2C) interface, an inter-integrated circuit sound (integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device.

It may be understood that an interface connection relationship between modules illustrated in this embodiment of this application is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

A wireless communication function of the electronic device 100 may be implemented by using the antenna 1, the antenna 2, the wireless communication module 150, and the like.

The wireless communication module 150 may provide a wireless communication solution that is applied to the electronic device 100 and that includes Wi-Fi (including Wi-Fi aware and Wi-Fi AP), Bluetooth (Bluetooth, BT), and a wireless data transmission module (for example, 433 MHz, 868 MHz, and 915 MHz). The wireless communication module 150 may be one or more components integrating at least one communication processing module. The wireless communication module 150 receives an electromagnetic wave through the antenna 1 and/or the antenna 2, performs filtering and frequency modulation on an electromagnetic wave signal, and sends a processed signal to the processor 110. The wireless communication module 150 may further receive a to-be-sent signal from the processor 110, perform frequency modulation and amplification on the to-be-sent signal, and convert the to-be-sent signal into an electromagnetic wave for radiation through the antenna 1 and/or the antenna 2.

The interface 120 for an external memory may be used to connect to an external storage card, for example, a micro SD card, to extend a storage capability of the electronic device 100. The external storage card communicates with the processor 110 through the interface 120 for an external memory, to implement a data storage function. For example, files such as music and videos are stored in the external storage card.

The internal memory 121 may be configured to store one or more computer programs. The one or more computer programs include instructions. The processor 110 may run the instructions stored in the internal memory 121, to enable the electronic device 100 to perform the Wi-Fi peer-to-peer connection method provided in some embodiments of this application, various applications, data processing, and the like. The internal memory 121 may include a code storage area and a data storage area. The code storage area may store an operating system. The data storage area may store data created in a process of using the electronic device 100, and the like. In addition, the internal memory 121 may include a high-speed random access memory, or may include a nonvolatile memory, for example, one or more magnetic disk storage components, a flash memory component, or a universal flash storage (universal flash storage, UFS). In some embodiments, the processor 110 may run the instructions stored in the internal memory 121 and/or the instructions stored in the memory disposed in the processor 110, to enable the electronic device 100 to perform the Wi-Fi peer-to-peer connection establishment method provided in embodiments of this application, another application, and data processing.

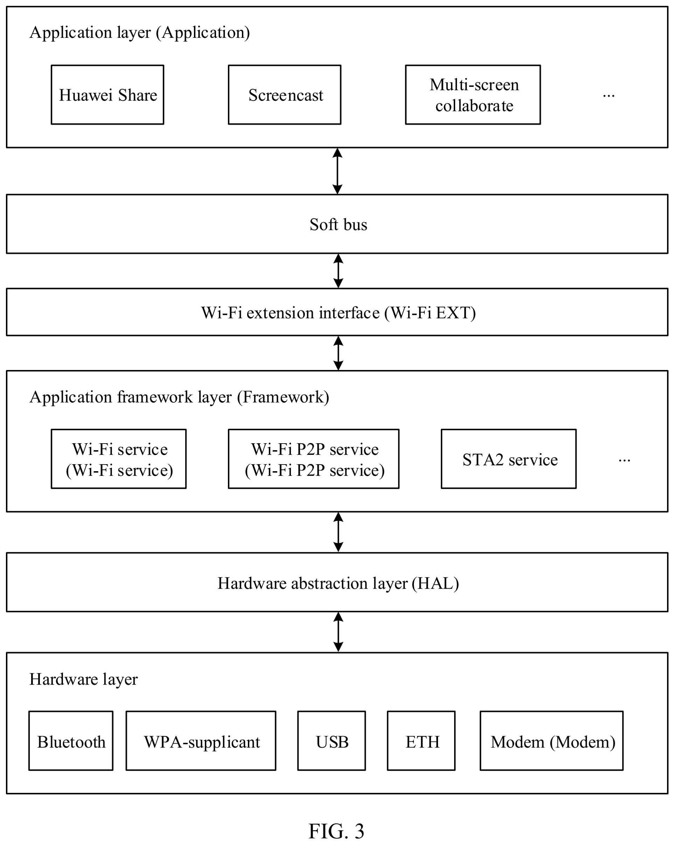

Refer to FIG. 3. FIG. 3 is an example architectural diagram of a software system on an electronic device according to an embodiment of this application. As shown in FIG. 3, the system architecture mainly includes a hardware layer, a hardware abstraction layer (hardware abstraction layer, HAL), an application framework layer (Framework), and an application layer from bottom to top. In addition, a soft bus and a Wi-Fi extension interface (Wi-Fi EXT) are further included between the application layer and the application framework layer. It may be understood that the soft bus and the Wi-Fi EXT may also be considered as components of the application framework layer.

Applications (for example, a "Huawei Share" application, a "ScreenCast" application, and a "Multi-Screen Collaborate" application in FIG. 2) at the application layer are some applications that can be directly accessed by a user and that use a framework interface. The application runs on the electronic device, and is a window for interaction between the user and the electronic device.

The soft bus includes a Wi-Fi functional module, which may provide services such as Wi-Fi device discovery, a Wi-Fi connection, networking, and a task and a data bus.

The Wi-Fi EXT provides a Wi-Fi interface extension function to enhance a Wi-Fi interface function, so that the application layer can invoke a Wi-Fi related service provided by the framework.

The framework is some system capabilities running on top of the operating system of the electronic device. An Android open source code project (Android open source project, AOSP) is used as an example. The AOSP provides some related interfaces and services for operating Wi-Fi peer-to-peer. For example, a Wi-Fi peer-to-peer related service may include a Wi-Fi P2P service, an interface type corresponding to the Wi-Fi P2P service is a Wi-Fi P2P manager (Manager) type, and an interface of the Wi-Fi P2P manager type includes providing interfaces such as device discovery (discoverPeers) and connection (connect). These interfaces can be used by the user to directly control Wi-Fi peer-to-peer.

The HAL is an interface layer between an operating system kernel and a hardware circuit, and aims at hardware abstraction. The hardware abstraction layer hides details of a hardware interface of a specific platform and provides a virtual hardware platform for the operating system, so that the operating system is hardware-independent and can be transplanted on a plurality of platforms.

The hardware layer may include a plurality of communication interfaces, such as a Bluetooth interface, a universal serial bus (universal serial bus, USB) interface, an Ethernet (Ethernet, ETH) interface, and a modem (modem) shown in FIG. 2. The hardware layer further includes middleware. The middleware is responsible for forwarding all messages between a kernel mode and a user mode in a running process of the electronic device. Currently, one of the most widely used middleware is wpa_supplicant. wpa_supplicant is a daemon process that runs independently on a device and is used to forward a message. The hardware layer may further include a Wi-Fi driver (Wi-Fi Driver), a Wi-Fi chip (Chipset), and the like (not shown in the figure). A Wi-Fi peer-to-peer connection protocol is generally implemented in the Wi-Fi chip. The Wi-Fi driver is responsible for interfacing the Wi-Fi chip with the operating system of the terminal device.

The framework layer in the terminal device interacts with the chip by using the driver. For example, AOSP is used as an example. The framework layer interacts with the driver and supports encryption and authentication by using wpa_supplicant, and provides, by using the application layer, several interface functions that can be directly called by developers/services. After calling, the driver may enable the chip to perform a corresponding Wi-Fi peer-to-peer related operation. The framework layer is responsible for message forwarding and coordination, connection management, and the like between an upper-layer application and lower-layer hardware (including wpa_supplicant, the Wi-Fi driver, and the chipset). Currently, all Wi-Fi peer-to-peer operations performed by the user are implemented at the application layer by invoking a Wi-Fi peer-to-peer related interface and service in the framework.

In some embodiments of this application, a complete Wi-Fi peer-to-peer service includes three phases: device discovery, a device connection, and service data transmission. After a Wi-Fi peer-to-peer connection is established, a group (or may be referred to as a Wi-Fi peer-to-peer group, for example, a Wi-Fi P2P group) is formed. In the group, there are two roles for devices: a group manager and a group client. In Wi-Fi P2P, the group manager is referred to as a GO (group owner, group owner), and the group client is referred to as a GC (group client, group client). Within one Wi-Fi P2P group, there is one and only one GO device, and there may be one or more GC devices.

Wi-Fi P2P is used as an example. In the Wi-Fi direct protocol specification, establishing a Wi-Fi P2P connection requires four steps in total: Wi-Fi P2P device discovery (Device Discovery), group negotiation (Group Formation), a Wi-Fi protected setup (Wi-Fi protected setup, WPS) procedure, and an association connection.

Wi-Fi P2P device discovery includes two phases: scan (scan) and find (find). The scan phase is used to discover an existing GO device. The find phase is divided into a listen phase (listen State) and a search phase (search State). The Wi-Fi P2P device switches between the search phase and the listen phase back and forth. In the search phase, the Wi-Fi P2P device sends a probe request frame (Probe Request). In the listen phase, the Wi-Fi P2P device receives a probe request frame (Probe Request) of another device and replies with a probe response frame (ProbeResponse). For the search phase and the listen phase, only when two Wi-Fi P2P devices are in different phases, the two devices can discover each other and proceed with a subsequent process. Therefore, duration of the two phases is random, to ensure that a window in which the two phases are misaligned can appear.

Group negotiation is a next phase after Wi-Fi P2P device discovery. On a Wi-Fi P2P connection, there are GO and GC roles for both devices. Therefore, before a connection, respective roles of the devices need to be negotiated.

The WPS procedure is a next step after group negotiation, and is used to ensure security and reliability of an established connection, and avoid security vulnerabilities such as identity spoofing.

The final association connection relates to four-way handshake. After the handshake is completed, a trusted Wi-Fi P2P connection is established between the two devices.

In the foregoing Wi-Fi P2P connection establishment process, both the devices switch between the search phase and the listen phase. Only when one device is in the listen phase and the other device is in the search phase, a device can be discovered. However, in this process, both devices may need to switch between the search phase and the listen phase a plurality of times to meet a device discovery condition. Consequently, the Wi-Fi P2P connection process takes long time, and user experience is poor.

To accelerate the Wi-Fi P2P connection establishment process, a standard Wi-Fi P2P connection establishment process is modified and optimized in some other embodiments of this application. Bluetooth low energy (Bluetooth low energy, BLE) discovery is used to replace Wi-Fi P2P device discovery to accelerate the discovery process. After a device is discovered through BLE, the GO/GC role is directly specified by using a service, to simplify the group negotiation process. A BLE/Bluetooth basic rate (basic rate, BR) connection is established, security authentication and P2P group information exchange are performed based on the BLE/BR connection, so that the GC device can directly access the P2P group on a specified channel, thereby implementing a Wi-Fi P2P connection.

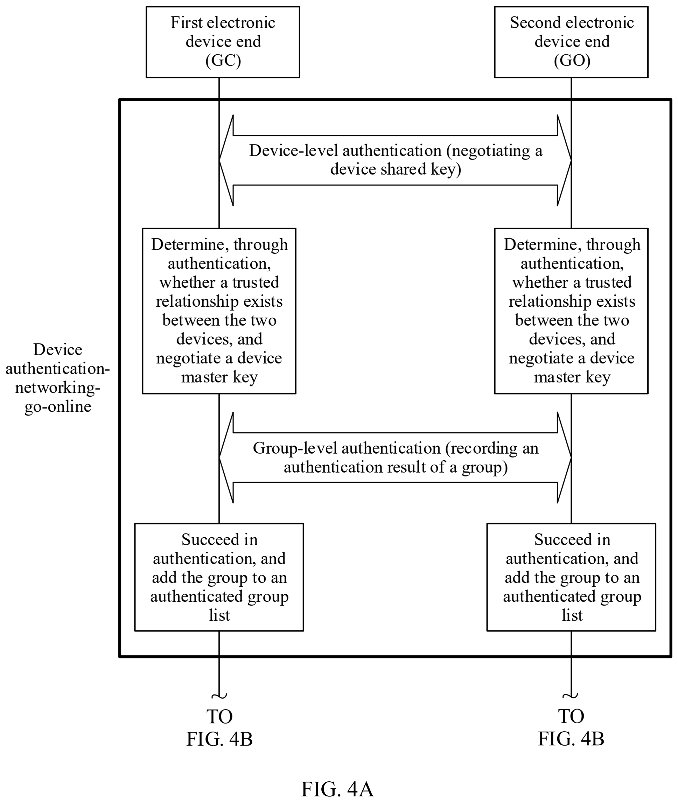

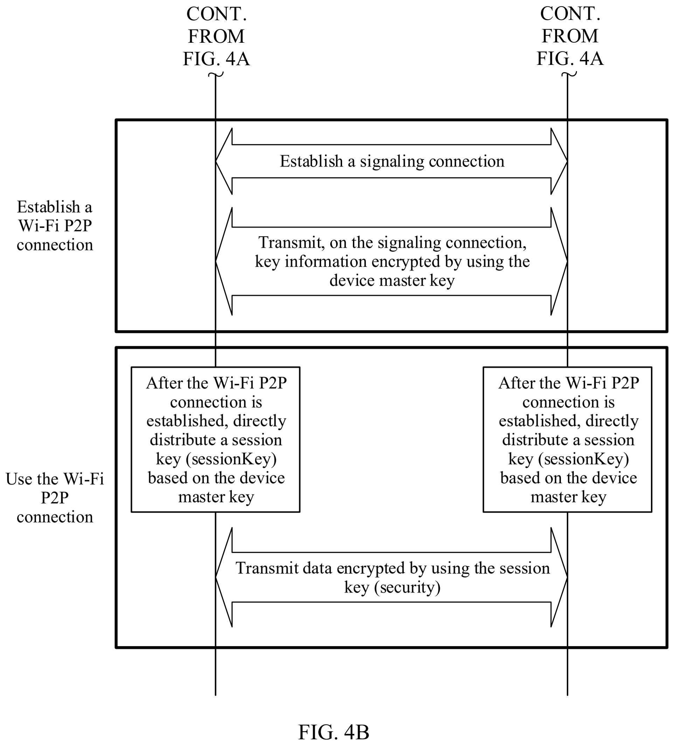

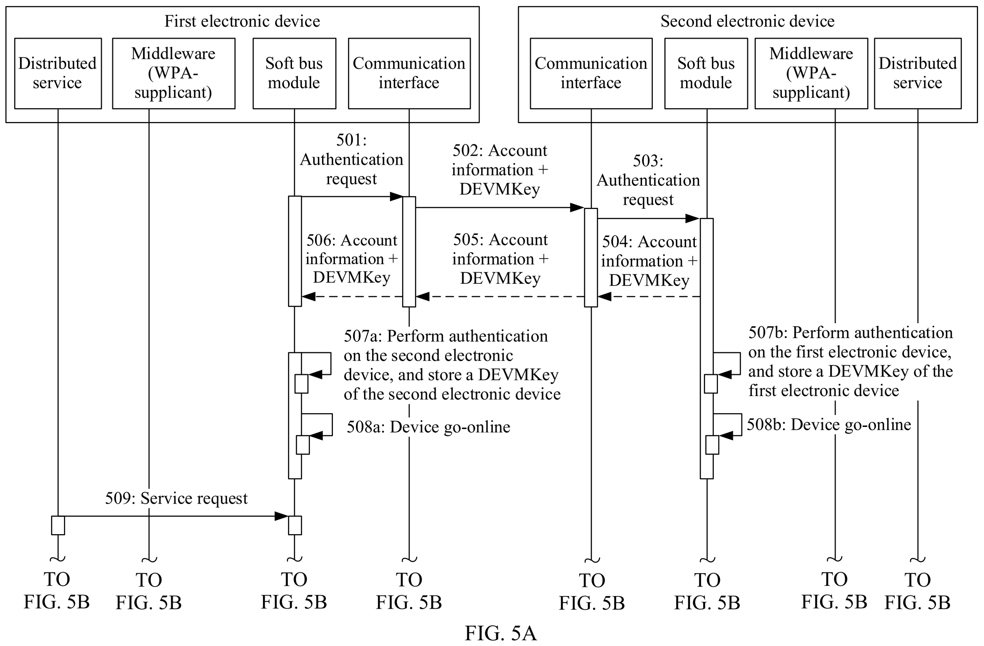

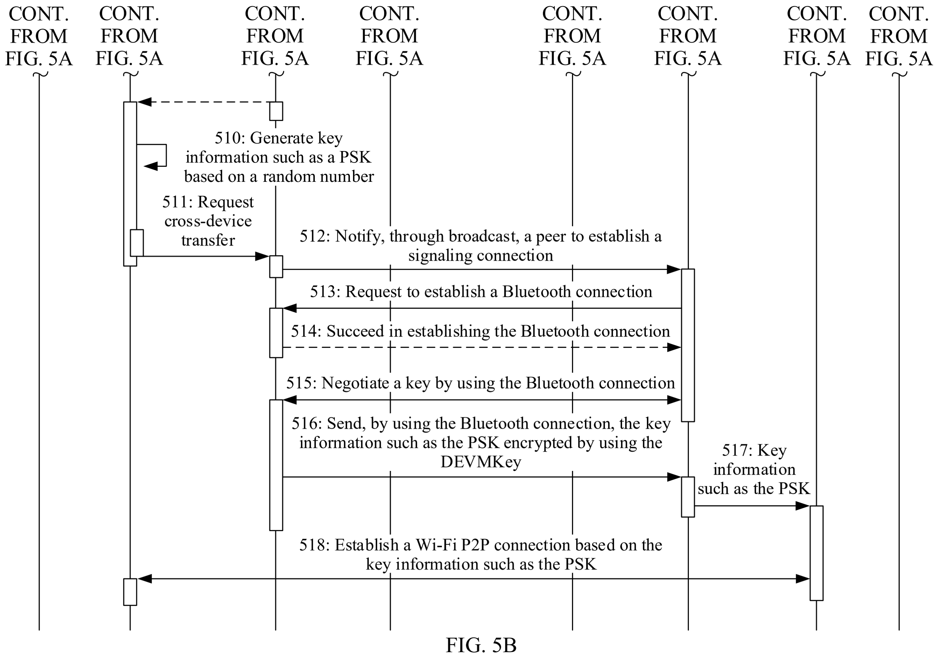

Refer to FIG. 4A to FIG. 5B. FIG. 4A and FIG. 4B are an example block diagram of a Wi-Fi P2P connection establishment process according to an embodiment of this application. FIG. 5A and FIG. 5B are an example signaling interaction diagram of a Wi-Fi P2P connection establishment process implemented based on the system architecture shown in FIG. 1. With reference to FIG. 4A to FIG. 5B, the following describes a Wi-Fi P2P connection establishment process provided in an embodiment of this application.

As shown in FIG. 4A to FIG. 5B, a device authentication-networking-go-online process occurs in a device discovery phase. In this phase, device-level authentication and group-level authentication are implemented between a first electronic device and a second electronic device. In the device-level authentication process, the two devices implement device-level key negotiation. In the group-level authentication process, the two devices record an authentication result of a group. A signaling interaction process in this phase may be shown in FIG. 5A and FIG. 5B. In 501 to 503, a soft bus in the first electronic device sends an authentication request to a communication interface, where the authentication request includes an encrypted device master key (DEVMKey) of the first electronic device and encrypted account information of the first electronic device. After receiving the authentication request, a communication interface of the second electronic device sends the authentication request to a soft bus of the second electronic device. In 504 to 506, the soft bus of the second electronic device sends an encrypted DEVMKey of the second electronic device to the first electronic device. In 507a and 508a, the first electronic device verifies whether the account information of the first electronic device and account information of the second electronic device are the same, and if the account information of the first electronic device and the account information of the second electronic device are the same, authentication on the second electronic device succeeds, and the second electronic device is added to a group trust list, to complete device go-online. In 507b and 508b, the second electronic device verifies whether the account information of the first electronic device and account information of the second electronic device are the same, and if the account information of the first electronic device and the account information of the second electronic device are the same, authentication on the first electronic device succeeds, and the first electronic device is added to a group trust list, to complete device go-online.

As shown in FIG. 4A to FIG. 5B, after device authentication and go-online are completed, a Wi-Fi P2P connection establishment phase is entered. In this phase, a Bluetooth or another type of signaling connection is first established, and confidential information and second information that are used to establish a Wi-Fi P2P connection are transmitted between the two electronic devices by using the signaling connection. Then, the two devices establish the Wi-Fi P2P connection based on the confidential information and the second information. For example, the signaling connection is a Bluetooth connection. A signaling interaction process in this phase may be shown in FIG. 5A and FIG. 5B. In 509 to 511, after receiving a service request sent by a distributed service application, the soft bus of the first electronic device triggers middleware (for example, WPA-supplicant) to generate confidential information such as a pre-shared key (pre-shared key, PSK) and a service set identifier (service set identifier, SSID) based on a random number, and send the confidential information to the soft bus. In 512 to 514, the soft bus of the first electronic device sends a broadcast message, to notify the second electronic device to establish a signaling connection, and the second electronic device initiates a Bluetooth connection establishment process based on the notification. In 515, the first electronic device and the second electronic device negotiate a session key (session key) by using the Bluetooth connection, where the session key may be used to encrypt transmitted information in an interaction process in an association connection phase. The first electronic device and the second electronic device may further send respective second information such as a P2P capability (P2P capability), a connection status (status), a supported channel list (channel list), and an operating channel attribute (operating channel attribute) to a peer device by using the Bluetooth connection. In 516 and 517, the first electronic device sends, to the second electronic device by using the signaling connection, the confidential information (such as the PSK and the SSID) encrypted by using the DEVMKey. In 518, the second electronic device creates a GO, and initiates a Wi-Fi P2P connection establishment process based on the confidential information.

As shown in FIG. 4A to FIG. 5B, before the Wi-Fi P2P connection is established, a signaling connection such as BLE/BR needs to be established first. It takes long time to establish the BLE/BR connection. For example, a typical value of BLE connection establishment duration is 1-2 seconds, and a typical value of BR connection establishment duration is 2-3 seconds. After the BLE/BR connection is established, confidential information and second information further need to be transmitted based on the BLE/BR connection. Consequently, the Wi-Fi P2P connection process takes relatively

long time. In addition, in the foregoing process, Wi-Fi P2P connection establishment strongly depends on the BLE/BR connection. This process is basically customized by using a service, and does not have universality and scalability. Similarly, a problem of a long delay also exists in an HML connection establishment process and an AWDL connection establishment process.

Therefore, some other embodiments of this application provide a Wi-Fi peer-to-peer connection establishment method and an apparatus that can implement the method, to reduce a delay in establishing a Wi-Fi peer-to-peer connection. According to the Wi-Fi peer-to-peer connection establishment method provided in this embodiment of this application, after a device discovery process, when a Wi-Fi peer-to-peer connection needs to be established, electronic devices each generate, based on a device master key, confidential information (for example, a PSD and an SSID) used to establish the Wi-Fi peer-to-peer connection, and does not need to establish a signaling connection such as BLE/BR and transfer information by using the BLE/BR signaling connection. In this way, a delay in establishing the BLE/BR signaling connection and a delay in exchanging information by using the BLE/BR signaling connection can be reduced, thereby reducing a delay in establishing the Wi-Fi peer-to-peer connection.

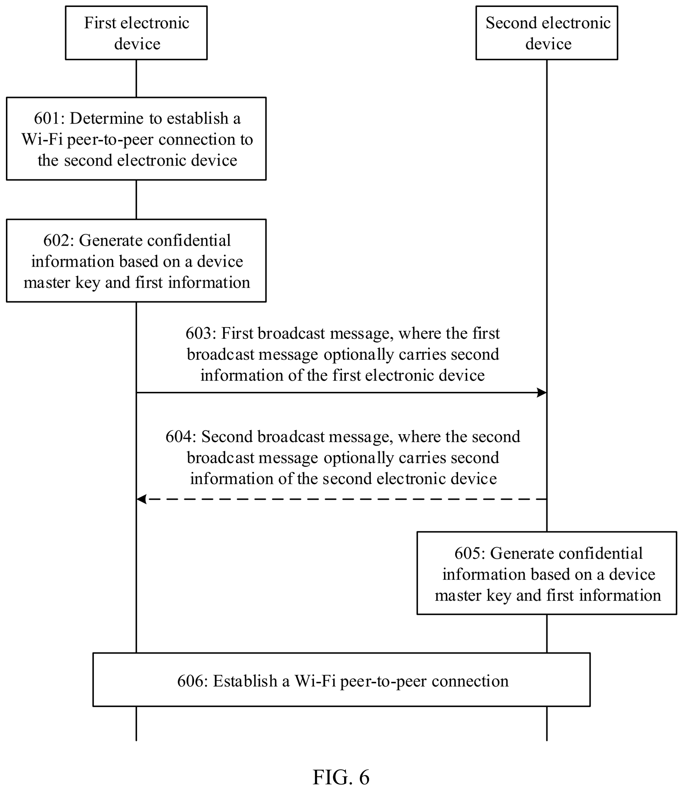

Based on the network system architecture shown in FIG. 1, FIG. 6 is an example logical block diagram of another Wi-Fi peer-to-peer connection process according to an embodiment of this application. The solution in FIG. 6 is described by using an example in which a first electronic device and a second electronic device interact with each other. For example, the first electronic device may be the mobile phone 11 in the network system architecture shown in FIG. 1, and the second electronic device may be the tablet computer 12 or the large screen 13 in the network system architecture shown in FIG. 1.

As shown in FIG. 6, the procedure may include the following steps 601 to 605.

Step 601: The first electronic device determines to establish a Wi-Fi peer-to-peer connection to the second electronic device.

In some cases, the first electronic device may automatically establish the Wi-Fi peer-to-peer connection to the second electronic device, or establishment of the Wi-Fi peer-to-peer connection to the second electronic device is triggered by using a distributed service.

In some other cases, the Wi-Fi peer-to-peer connection is established based on a user request. For example, a user performs a user operation on the first electronic device, to trigger establishment of the Wi-Fi peer-to-peer connection between the first electronic device and the second electronic device. That the first electronic device is the mobile phone 11 in FIG. 1 and the second electronic device is the large-screen device 13 in FIG. 1 is used as an example. The user may trigger, in the following two operation manners, establishment of the Wi-Fi P2P connection between the mobile phone 11 and the large-screen device 13.

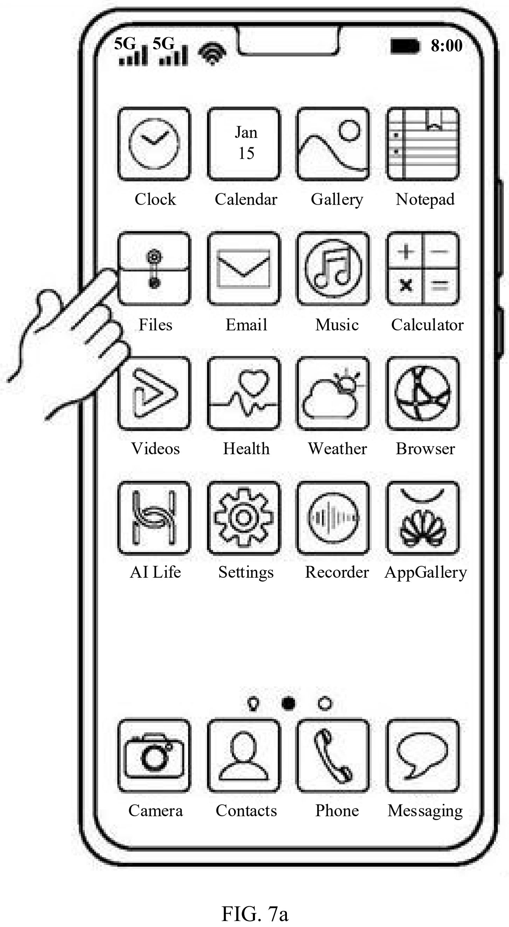

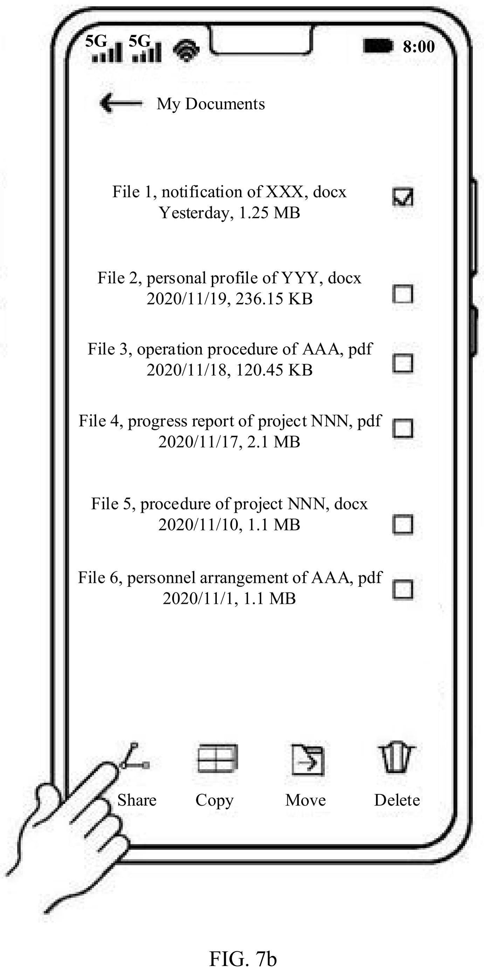

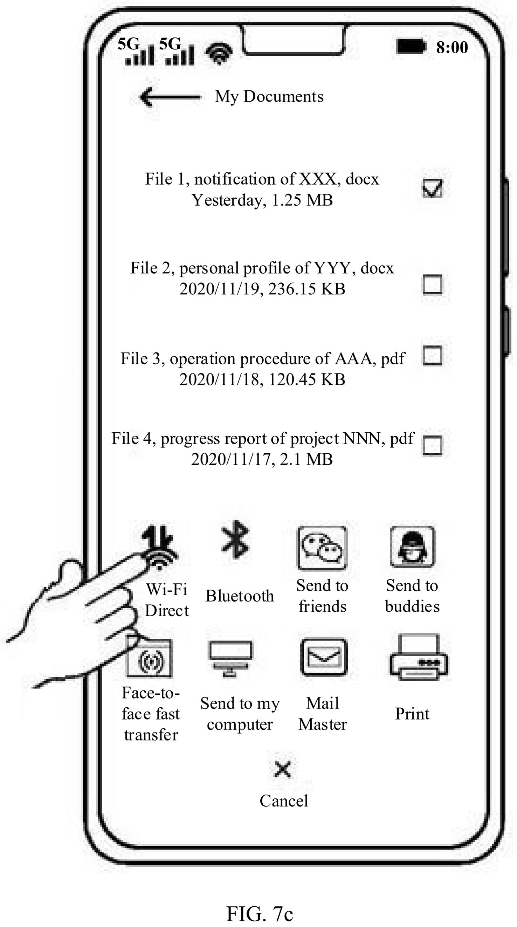

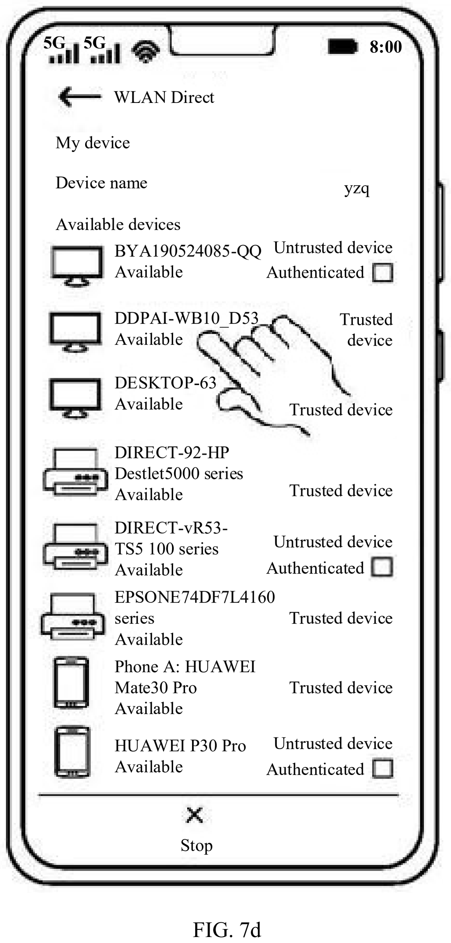

Manner 1: It is assumed that the user needs to share a file with the large-screen device by using the mobile phone. As shown in FIG. 7a, the user opens a "File Manager" application on the mobile phone, and a displayed interface is shown in FIG. 7b. The user selects a file (for example, a file 1) that needs to be shared, taps "Share", and selects a sharing manner. A displayed interface is shown in FIG. 7c. The user selects a sharing manner of "Wi-Fi Direct", and the application on the mobile phone displays a previously stored list of available devices to the user. The list of available devices includes device identifiers of one or more devices. For example, the displayed list of available devices may be shown in FIG. 7d. The user may select a device (for example, a large-screen device) from the list of available devices as required. For example, the user taps a device identifier of the large-screen device in the list of devices, to select the large-screen device.

Optionally, as shown in FIG. 7d, the mobile phone may further display, to the user, whether each device in the displayed list of available devices is a trusted device. If a device is an untrusted device, an icon indicating whether authentication is required may be further displayed to the user. If the user determines that authentication is required, the user may tap "Authenticate", and the mobile phone automatically performs security authentication with the device. If the security authentication succeeds, the device is displayed as a trusted device. If the security authentication fails, the device is still displayed as an untrusted device.

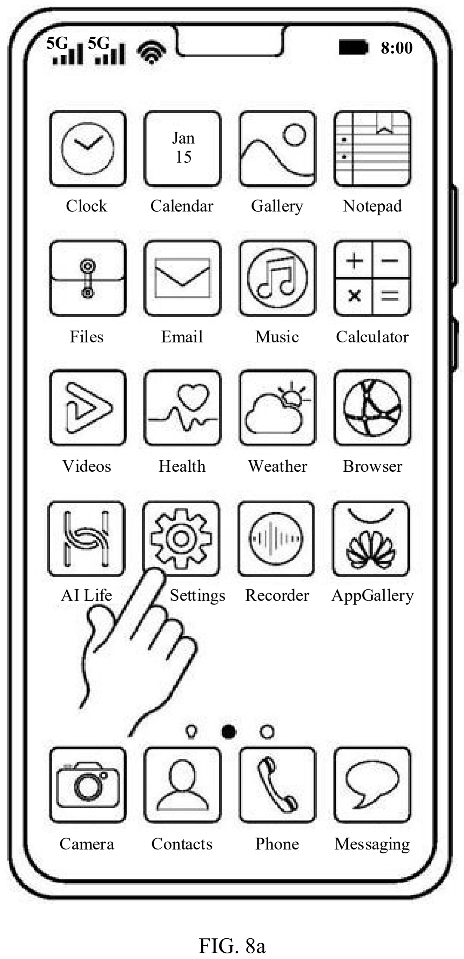

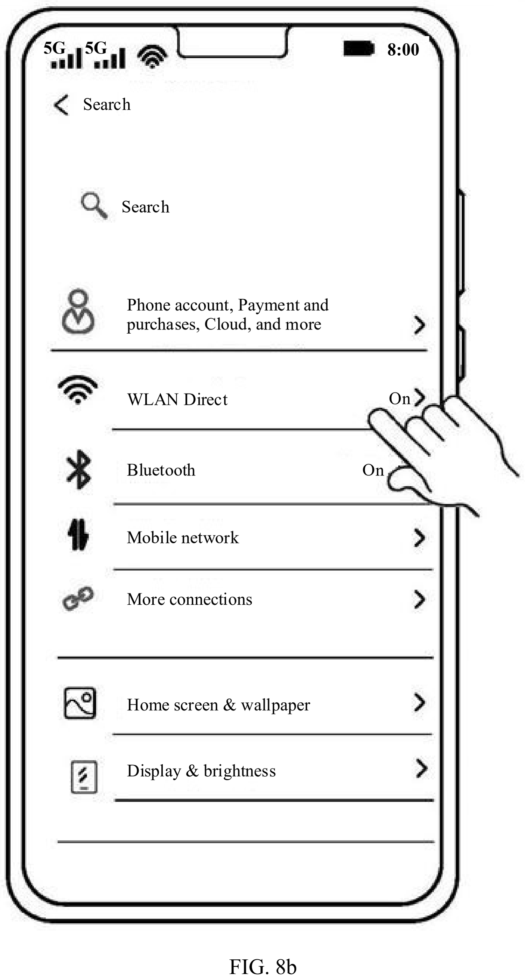

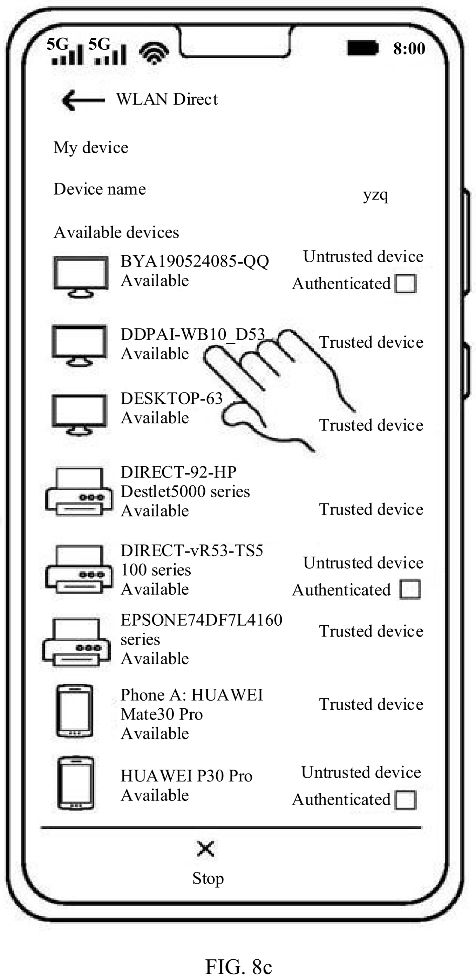

Manner 2: It is assumed that a purpose of the user is merely to connect the mobile phone to the large-screen device through Wi-Fi P2P, to facilitate quick file transfer when data or file needs to be shared subsequently. The user taps "Settings" on an interface that is displayed on the mobile phone and that is shown in FIG. 8a. A displayed interface is shown in FIG. 8b. The user taps a "WLAN Direct" menu, to trigger the Wi-Fi P2P connection. After the user taps "WLAN Direct", an interface shown in FIG. 8c is displayed, and the application on the mobile phone displays a previously stored list of available devices to the user. The list of available devices includes device identifiers of one or more devices. For example, the displayed list of available devices may be shown in FIG. 8c. The user may select a device (for example, a large-screen device) from the list of available devices as required. For example, the user taps a device identifier of the large-screen device in the list of available devices, to select the large-screen device.

Optionally, as shown in FIG. 8c, the mobile phone may further display, to the user, whether each device in the displayed list of available devices is a trusted device. If a device is an untrusted device, an icon indicating whether authentication is required may be further displayed to the user. If the user determines that authentication is required, the user may tap "Authenticate", and the mobile phone automatically performs security authentication with the device. If the security authentication succeeds, the mobile phone displays the device as a trusted device. If the security authentication fails, the device is still displayed as an untrusted device.

It should be understood that, in this embodiment of this application, in addition to the foregoing two operation manners, the user may further trigger, in another operation manner, the mobile phone to establish the Wi-Fi P2P connection to the another device. This is not limited in this embodiment of this application.

It should be further understood that, in this embodiment of this application, the interface diagrams shown in FIG. 7a to FIG. 7d and FIG. 8a to FIG. 8c are merely examples, and should not impose any limitation on an interface displayed in a process in which the user triggers the mobile phone to establish the Wi-Fi P2P connection to another device in this embodiment of this application. For example, in some other embodiments of this application, the icon on the interface displayed on the mobile phone may include more or fewer icons than those displayed on the interfaces shown in FIG. 7a to FIG. 7d or FIG. 8a to FIG. 8c, or combine some icons, or split some icons, have different icons, or the like. This is not limited in this embodiment of this application.

In some embodiments of this application, a trust relationship exists between the first electronic device and the second electronic device, to ensure security of the Wi-Fi peer-to-peer connection, thereby ensuring security of the distributed service. Optionally, the trust relationship between the first electronic device and the second electronic device may be established in the following manner:
Manner 1: If the first electronic device and the second electronic device log in by using a same account, a trust relationship is established between the first electronic device and the second electronic device.
Manner 2: A trust relationship is established between the first electronic device and the second electronic device after the first electronic device and the second electronic device are bound by using a personal identification number (personal identification number, PIN) or by scanning a code. For example, in FIG. 7a to FIG. 7d or FIG. 8a to FIG. 8c, if a device in the list of available devices is an untrusted device, an icon indicating whether authentication is required is displayed to the user. If the user determines that authentication is required, the user may tap "Authenticate", and the mobile phone pops up an interface for entering the PIN, and performs security authentication with a peer device based on the PIN entered by the user. For another example, after the first electronic device is used to scan a graphic code provided by the second electronic device, a trust relationship is established between the first electronic device and the second electronic device.
Manner 3: If the first electronic device and the second electronic device communicate with each other a plurality of times, for example, send and receive files a plurality of times, a trust relationship may be established between the first electronic device and the second electronic device. The trust relationship has a validity period. Once the validity period expires, the first electronic device and the second electronic device no longer trust each other.
Manner 4: The first electronic device and the second electronic device perform device authentication based on the device master key through device interaction, and if the authentication succeeds, a trust relationship may be established. Optionally, the process may occur in a device discovery phase.

After the trust relationship is established between the first electronic device and the second electronic device, the first electronic device and the second electronic device may send a heartbeat message (a broadcast message) to each other based on a specified period, so as to maintain a device online state.

Step 602: The first electronic device generates confidential information based on a device master key and first information.

The confidential information is used to establish the Wi-Fi peer-to-peer connection in an association phase. For a specific implementation, refer to step 606.

Optionally, the confidential information may include information such as a pre-shared key (PSK) and/or an SSID. The information such as the PSK and SSID has a great impact on security of the Wi-Fi peer-to-peer connection. Once the information is leaked, the Wi-Fi peer-to-peer connection has security risks. Therefore, the information is referred to as confidential information. Correspondingly, in this embodiment of this application, other information used for the Wi-Fi peer-to-peer connection is collectively referred to as second information. For example, the second information may include one or more of the following: Wi-Fi peer-to-peer connection status information of the electronic device, device role information of the electronic device, station (station, STA) channel information of the electronic device, a channel list supported by the electronic device, dual-band dual-concurrent capability information of the electronic device, an address network segment of the electronic device, an IP address of the electronic device, a type of the electronic device, a battery level of the electronic device, and the like. It may be understood that some second information listed above is merely an example, and a type and an amount of the second information are not limited in this embodiment of this application.

The device master key is a device-level key, and is shared between the first electronic device and the second electronic device, that is, both the first electronic device and the second electronic device store the device master key.

Optionally, the device master key used to generate the confidential information is a device master key of a group manager device (GO device). Regardless of whether the first electronic device or the second electronic device is used as a GO device, the peer device stores the device master key of the GO device. The device master key described below in this embodiment of this application is the device master key of the GO device.

Optionally, the first information used to generate the confidential information may include time information and/or a connection count.

In a possible implementation, a method for generating the PSK may include: executing a first encryption algorithm based on the device master key and the first information to obtain a first character string; truncating the first character string based on a length of the PSK to obtain a first random number, for example, truncating the first character string from a first character or from another position of the first character string; and generating the PSK based on the first random number. For example, the first encryption algorithm is a time-based one-time password algorithm (Time-Based One-Time Password Algorithm). The first random number may be first generated based on the following formula, and then the PSK is generated based on the first random number by using a predetermined algorithm. The PSK may be a combination of a letter and a digit. The algorithm is not limited in this embodiment of this application.

In a possible implementation, a method for generating the SSID may include: executing a first encryption algorithm based on the device master key and the first information to obtain a first character string; truncating the first character string based on a length of the SSID to obtain a second random number, for example, truncating the first character string from a first character or from another position of the first character string; and generating the SSID based on the second random number. For example, the first encryption algorithm is a time-based one-time password algorithm (Time-Based One-Time Password Algorithm). The second random number may be first generated based on the following formula, and then the SSID is generated based on the second random number by using a predetermined algorithm. The SSID may be a combination of a letter and a digit. The algorithm is not limited in this embodiment of this application. An algorithm formula of the second random number is similar to an algorithm formula of the first random number.

Based on the system architecture shown in FIG. 3, in step 602, a soft bus of the first electronic device generates the first random number and the second random number based on the foregoing method, and sends the first random number and the second random number to middleware WPA-supplicant; and the WPA-supplicant generates the PSK based on the first random number, and generates the SSID based on the second random number.

In this embodiment of this application, when a GO/GC role is directly specified by using a service after device discovery, the first electronic device may directly determine the GO device, and generate the confidential information by using the device master key that is of the GO device and that is stored in the first electronic device. If the GO/GC role needs to be determined through negotiation, in this case, the first electronic device cannot determine which device is the GO device. The first electronic device may generate the confidential information based on the device master key of the first electronic device, and generate the confidential information based on the device master key of the second electronic device. After the GO device is subsequently determined through negotiation with the second electronic device, only the confidential information generated based on the device master key of the GO device is used to establish the Wi-Fi peer-to-peer connection.

Step 603: The first electronic device sends a first broadcast message, where the first broadcast message is used to notify the second electronic device to establish the Wi-Fi peer-to-peer connection to the first electronic device. Correspondingly, the second electronic device receives the first broadcast message.

The first electronic device may send, to the second electronic device by using the first broadcast message, second information that may be used to establish the Wi-Fi peer-to-peer connection.

In a possible implementation, the first broadcast message includes Wi-Fi peer-to-peer connection status information of the first electronic device. A Wi-Fi P2P connection is used as an example. Due to a limitation of the "Wi-Fi direct" standard protocol, the Wi-Fi P2P connection can occur only between the GO device and the GC device. In addition, there is a limitation that one GO device can be connected to a limited quantity of GC devices and one GC device can be connected to only one GO device. Therefore, before the Wi-Fi P2P connection is initiated, Wi-Fi P2P connection statuses of the first electronic device and the second electronic device affect a current Wi-Fi P2P connection. Optionally, the Wi-Fi peer-to-peer connection status information of the first electronic device may include one of the following: the first electronic device currently does not have a Wi-Fi peer-to-peer connection to any device, the first electronic device currently has a Wi-Fi peer-to-peer connection to another electronic device and a role of the first electronic device is a GO, and the first electronic device currently has a Wi-Fi peer-to-peer connection to another electronic device and a role of the first electronic device is a GC.

In another possible implementation, the first broadcast message includes device role information of the first electronic device. For example, the information may be device role indication information, which indicates a device role of the first electronic device.

In another possible implementation, the first broadcast message includes a Wi-Fi peer-to-peer channel list supported by the first electronic device, and the second electronic device may select a channel from the channel list based on a channel preference policy, so that the Wi-Fi peer-to-peer connection is established between the first electronic device and the second electronic device on the channel, to ensure performance and channel quality of the Wi-Fi peer-to-peer connection. The channel list may include a channel number. Optionally, the channel list may occupy 24 bits.

In another possible implementation, the first broadcast message includes station (station, STA) channel indication information of the first electronic device, for example, a channel number. The second electronic device may select an optimal channel based on a STA channel and the Wi-Fi peer-to-peer channel list of the first electronic device, to avoid, when quality of the selected channel deteriorates, frequent switching between the STA channel and a channel on which the Wi-Fi peer-to-peer connection is located. A Wi-Fi chip of a terminal device basically supports coexistence of a Wi-Fi station (Wi-Fi station) role and a Wi-Fi P2P role. The Wi-Fi station role may be understood as that the terminal device establishes a Wi-Fi connection by connecting to a router (Wi-Fi hotspot/AP), and the Wi-Fi P2P role may be understood as that the terminal device directly establishes a Wi-Fi connection to another device without using a router. When a Wi-Fi station connection and a Wi-Fi P2P connection of a terminal device are in a same frequency band but on different channels, a same-frequency different-channel case occurs, which affects performance of the Wi-Fi station connection and the Wi-Fi P2P connection. Therefore, a status of the Wi-Fi station of the terminal device also affects the Wi-Fi P2P connection, and the status of the Wi-Fi station may be reflected by using a frequency of an AP to which the terminal device is connected.

In another possible implementation, the first broadcast message includes dual-band dual-concurrent capability information of the first electronic device. Based on a quantity of frequency bands supported by the router and a concurrent method, a dual-band dual-transmit capability that can be supported by the electronic device may include the following types:
single-band single-concurrent (single-band single concurrent, SBSC), which supports sending and receiving a signal on only one frequency band;
dual-band single-concurrent (dual-band single-concurrent, DBSC), which supports two frequency bands, but supports only a single concurrent operation, and does not support concurrently sending a signal on two frequency bands;
dual-band dual-concurrent (dual-band dual-concurrent, DBDC), which support two frequency bands, and supports concurrently sending a signal on the two frequency bands; and
dual-band adaptive-concurrent (dual band adaptive concurrent, DBAC), which supports two frequency bands, and supports adaptive switching between the two frequency bands. Two complete paths are integrated in a Wi-Fi chip in an electronic device having this capability.

The Wi-Fi chip in the electronic device generally supports two frequency bands: 2.4 GHz and 5 GHz. Correspondingly, the dual-band dual-concurrent capability of the electronic device is either DBDC or DBAC.

The first electronic device sends, to the second electronic device, a dual-band dual-concurrent capability supported by the first electronic device, so that the second electronic device can determine a dual-band operating mode of the second electronic device based on the dual-band dual-concurrent capability of the first electronic device. For example, if both the first electronic device and the second electronic device support DBDC, the second electronic device may operate in a simultaneous dual-band (simultaneous dual band, SDB) mode. SDB may also be referred to as dual-band concurrent (5 GHz/2.4 GHz), and is a dual-band operating mode. An electronic device operating in this mode may simultaneously generate two independent wireless networks, which respectively correspond to 2.4 GHz and 5 GHz frequency bands. The two independent wireless networks may use different SSIDs, or may use a same SSID. The two networks run independently, and can concurrently transmit data. For another example, if both the first electronic device and the second electronic device support DBAC, the second electronic device may operate in a real simultaneous dual-band (real simultaneous dual band, RSDB) mode, and the operating mode relates to switching between different channels. Switching efficiency thereof directly affects service performance.

In another possible implementation, the first broadcast message includes an address network segment of the first electronic device, a battery level of the first electronic device, a type of the first electronic device, and the like.

In another possible implementation, the first broadcast message includes an IP address of the first electronic device.

It may be understood that the first broadcast message may include one or more items of the foregoing information.

It may be understood that, if some information (such as the battery level of the device and the type of the device) in the foregoing information has been exchanged in the device discovery phase, the information may not be included in the first broadcast message, to reduce signaling overheads.

After receiving the first broadcast message, the second electronic device determines a group manager (GO). The second electronic device may determine the GO in one of the following manners:
Manner 1: The GO/GC role is pre-specified. For example, the second electronic device is pre-specified as a GO device.
Manner 2: The second electronic device determines the GO device based on the device role information sent by the first electronic device. For example, if the device role sent by the first electronic device indicates that the first electronic device is a GC device, the second electronic device determines that the second electronic device is a GO device.

As described above, the device role information of the first electronic device may be sent to the second electronic device in the device discovery process, and/or may be sent to the second electronic device by using the first broadcast message.

Manner 3: The second electronic device determines the GO device based on the battery level of the first electronic device and a battery level of the second electronic device. For example, if a remaining power level of the second electronic device is high, the second electronic device determines that the first electronic device is a GO device. This is because the GO device needs to undertake a function of an AP (access, access point) and a group management task, which causes power consumption, and therefore a high battery level is required to ensure operating of the GO device.

As described above, the battery level information of the first electronic device may be sent to the second electronic device in the device discovery process, and/or may be sent to the second electronic device by using the first broadcast message.

Manner 4: The second electronic device determines the GO device based on the device type of the first electronic device and a device type of the second electronic device. For example, if the second electronic device determines, based on the type of the first electronic device and the type of the second electronic device, that the first electronic device is an electronic device of a high resource consumption type, the second electronic device determines that the first electronic device is a GO device. For example, compared with the mobile phone, the large-screen device is a device of a high resource consumption type.

Manner 5: The second electronic device determines the GO device based on the STA channel used by the first electronic device and a STA channel used by the second electronic device. For example, if the second electronic device determines, based on the STA channel of the first electronic device and the STA channel of the second electronic device, that a station is connected on the STA channel of the first electronic device, the second electronic device determines that the first electronic device is a GO device.

Manner 6: The second electronic device determines the GO device based on the IP address of the first electronic device and an IP address of the second electronic device. For example, if the IP address of the second electronic device is greater than the IP address of the first electronic device, it is determined that the second electronic device is a GO device.

It may be understood that several methods for determining the GO role that are listed above are merely an example. This is not limited in this embodiment of this application. It may be understood that the foregoing manners may be used in combination.

In this embodiment of this application, the first electronic device may send the first broadcast message through BLE/BR broadcast, or send the first broadcast message through constrained application protocol (constrained application protocol, CoAP) broadcast, or may send the first broadcast message through a local area network, or may send the first broadcast message through near field communication, or may perform notification through simple single-peer interaction. This is not limited in this embodiment of this application.

The first broadcast message may include indication information indicating the second electronic device, so that the second electronic device receives the first broadcast message and performs corresponding processing. Optionally, the indication information of the second electronic device may include information that may be used to identify the second electronic device, such as a device name and/or a MAC address of the second electronic device.

Step 604: The second electronic device sends a second broadcast message based on the first broadcast message. This step is optional and is represented by a dashed line in the figure.

The second electronic device may send, to the first electronic device by using the second broadcast message, second information that may be used to establish the Wi-Fi peer-to-peer connection.

In a possible implementation, the second broadcast message includes Wi-Fi peer-to-peer connection status information of the second electronic device. The Wi-Fi peer-to-peer connection status information of the second electronic device may include one of the following: the second electronic device currently does not have a Wi-Fi peer-to-peer connection to any device, the second electronic device currently has a Wi-Fi peer-to-peer connection to another electronic device and a role of the second electronic device is a GO, and the second electronic device currently has a Wi-Fi peer-to-peer connection to another electronic device and a role of the second electronic device is a GC.

In another possible implementation, the second broadcast message includes device role information of the second electronic device. For example, the information may be device role indication information, which indicates a device role of the second electronic device.

In another possible implementation, the second broadcast message includes STA (station) channel indication information of the second electronic device, for example, a channel number.

In another possible implementation, the second broadcast message includes channel indication information, for example, a channel number, where the channel is selected, based on a channel priority policy, by the second electronic device from the received channel list supported by the first electronic device.

In another possible implementation, the second broadcast message includes dual-band dual-concurrent capability information of the second electronic device. For related content of the dual-band dual-concurrent capability, refer to the foregoing descriptions.

In another possible implementation, the second broadcast message includes an address network segment of the second electronic device, a battery level of the second electronic device, a type of the second electronic device, and the like.

In another possible implementation, the second broadcast message includes an IP address of the second electronic device.

It may be understood that the second broadcast message may include one or more items of the foregoing information.

It may be understood that, if some information (such as the battery level of the device and the type of the device) in the foregoing information has been exchanged in the device discovery phase, the information may not be included in the second broadcast message, to reduce signaling overheads.

In a possible implementation, if the second electronic device determines that the second electronic device is a GC, the second electronic device notifies, by using the second broadcast message, that the first electronic device is a GO, for example, includes indication information in the second broadcast message, where the indication information indicates that the first electronic device is a GO. Further, the second electronic device adds one or more items of the second information to the second broadcast message, and sends the second broadcast message to the first electronic device. If the second electronic device determines that the second electronic device is a GO, the second electronic device may send the second broadcast message, or may not send the second broadcast message. If the second electronic device does not send the second broadcast message, the second information of the second electronic device may be sent to the first electronic device in a subsequent step 606.

In this embodiment of this application, the second electronic device may send the second broadcast message through BLE/BR broadcast, or send the first broadcast message through CoAP broadcast, or may send the second broadcast message through a local area network, or may send the second broadcast message through near field communication, or may perform notification through simple single-peer interaction. This is not limited in this embodiment of this application.

The second broadcast message may include indication information indicating the first electronic device, so that the first electronic device receives the second broadcast message and performs corresponding processing. Optionally, the indication information of the first electronic device may include information that may be used to identify the first electronic device, such as a device name and/or a MAC address of the first electronic device.

Step 605: The second electronic device generates confidential information based on a device master key and first information, where the confidential information is used in a Wi-Fi peer-to-peer connection establishment process.

The second electronic device generates the confidential information in a same manner as the first electronic device.

The first electronic device and the second electronic device store the device master key of each other, that is, both the first electronic device and the second electronic device may obtain the device master key of the GO device, and the first electronic device and the second electronic device may generate the confidential information based on the connection count. Therefore, it can be ensured that the connection counts used by the first electronic device and the second electronic device to generate the confidential information are the same, the connection counts that are stored in the first electronic device and the second electronic device and that are used to establish the Wi-Fi peer-to-peer connection are the same, and the first electronic device and the second electronic device generates the confidential information by using a same algorithm. Therefore, it can be ensured that the confidential information generated by the first electronic device and the second electronic device is the same, for example, same PSKs and SSIDs are generated.

Step 606: Establish a Wi-Fi peer-to-peer connection between the first electronic device and the second electronic device.

In this step, the first electronic device and the second electronic device each establish the Wi-Fi peer-to-peer connection based on the confidential information (for example, the PSD and the SSID), the second information of the first electronic device, and the second information of the second electronic device.

It may be understood that in step 606, the Wi-Fi peer-to-peer connection establishment process is completed by exchanging a plurality of messages between the first electronic device and the second electronic device.

In a possible manner, the GO device first sends a Wi-Fi peer-to-peer connection establishment request to the peer device, and then the Wi-Fi peer-to-peer connection establishment process may be completed by using a four-way handshake process. For an implementation of the Wi-Fi peer-to-peer connection establishment process, refer to the Wi-Fi direct protocol. This is not limited in this embodiment of this application.

In another possible manner, the second electronic device determines that the second electronic device is a GO device, and directly establishes the Wi-Fi peer-to-peer connection to the first electronic device. Specifically, after receiving the first broadcast message, the second electronic device determines a Wi-Fi peer-to-peer connection manner based on the generated confidential information (such as the PSK and the SSID), the second information of the first electronic device, and the second information of the second electronic device. For example, the second electronic device may determine, based on information of the first electronic device such as a Wi-Fi station channel, a supported channel list, and whether wideband is supported, a frequency on which the GO device finally establishes the connection, and create a Wi-Fi peer-to-peer group. The second electronic device sends a Wi-Fi peer-to-peer connection establishment request to the first electronic device, where the Wi-Fi peer-to-peer connection establishment request may include: a frequency on which the Wi-Fi peer-to-peer group is established, role assignment of the GC device and the GO device, an SSID of the Wi-Fi peer-to-peer group, a MAC address or an IP address and a port number of the first electronic device, and the like. The first electronic device creates a Wi-Fi peer-to-peer group based on the received Wi-Fi peer-to-peer connection establishment request. After the Wi-Fi peer-to-peer group is created on the first electronic device and the second electronic device, an application on the first electronic device and an application on the second electronic device establish a transmission channel that is based on the Wi-Fi peer-to-peer connection, and the application on the first electronic device starts to transmit data to the application on the second electronic device through the transmission channel that is based on the Wi-Fi peer-to-peer connection.

It may be understood that, in this embodiment of this application, a sequence of performing step 604 and step 605 is not limited. Step 604 may be performed before step 605, or may be performed after step 605, or may be performed simultaneously with step 605. In other words, the second electronic device may send the second broadcast message before the second electronic device generates the confidential information, or may send the second broadcast message after the second electronic device generates the confidential information, or may send the second broadcast message when the second electronic device generates the confidential information. This is not limited in this embodiment of this application.

In a possible implementation, in the foregoing step 603 in FIG. 6, the first broadcast message includes a first verification code generated by the first electronic device; and after receiving the first broadcast message, the second electronic device generates a second verification code, and compares the first verification code with the second verification code. If the first verification code is the same as the second verification code, the verification succeeds, indicating that the first electronic device is a trusted device, and the second electronic device performs a subsequent processing operation, for example, replies with the second broadcast message, creates the GO, or generates the confidential information. If the verification fails, the second electronic device may automatically return to the procedure shown in FIG. 5A and FIG. 5B. For example, the second electronic device requests the first electronic device to establish a Bluetooth connection, and after the Bluetooth connection is established between the first electronic device and the second electronic device, the second information is exchanged and the confidential information is transferred by using the Bluetooth connection.

Optionally, a method for generating the first verification code by the first electronic device is as follows: executing a first encryption algorithm based on the device master key and the connection count to obtain a first random number; and truncating the first random number based on a specified length (for example, 4 bytes) to obtain the first verification code. The second electronic device generates the second verification code by using a same method. Optionally, the first encryption algorithm is the same as an encryption algorithm for generating the confidential information, so that solution complexity can be reduced.

The first electronic device and the second electronic device store the DEVMKey of the GO device, and only the first electronic device and the second electronic device know a current connection count. Therefore, it can be ensured that verification codes calculated by the two parties are the same in a trusted case, and if the verification codes calculated by the two parties are different, it indicates an untrusted case. Because a result of a hash operation is irreversible, a calculation result before the hash operation cannot be obtained. This can prevent an attack and spoofing, and improve security. In another case, even if an untrusted electronic device can obtain encrypted information, when the device master key DEVMKey cannot be obtained, the connection count cannot be inferred, and a trusted verification code cannot be calculated. This can prevent an attack and spoofing. In another case, even if an untrusted electronic device can obtain the connection count, when the DEVMKey cannot be obtained, a trusted verification code cannot be calculated. This can prevent an attack and spoofing can be prevented, and improve security.

In some embodiments of this application, in step 603, after receiving the first broadcast message, the second electronic device may determine whether the first electronic device is online. If the first electronic device is online, the second electronic device may perform a subsequent processing operation, for example, compare the verification code. If the first electronic device is not online, the second electronic device may reject the Wi-Fi peer-to-peer connection establishment request of the first electronic device. In the device discovery phase, after the authentication on the first electronic device and the second electronic device succeeds, the first electronic device and the second electronic device may send a heartbeat message (a broadcast message) to each other based on a specified period, to keep the devices online. The electronic device may store a device list used to record a nearby online device. Once a heartbeat message sent by a device is not received within a specified time length, it may be considered that the device is not online, and the device is deleted from the device list. In this embodiment, after the second electronic device receives the first broadcast message, if the second electronic device determines that the first electronic device is not in the device list of nearby online devices that is stored in the second electronic device, it may be considered that the first electronic device is not online, and the second electronic device may reject the Wi-Fi peer-to-peer connection request of the first electronic device.

In some embodiments of this application, before step 601, device discovery may be first performed. In the device discovery phase, some second information used for the Wi-Fi peer-to-peer connection may be exchanged between the devices for use in subsequent steps. For example, the second information may include information such as a device name, a media access control (media access control, MAC) address, account information of the device, Bluetooth and Wi-Fi switch status information of the device, a battery level of the device, a type of the device, and the like.

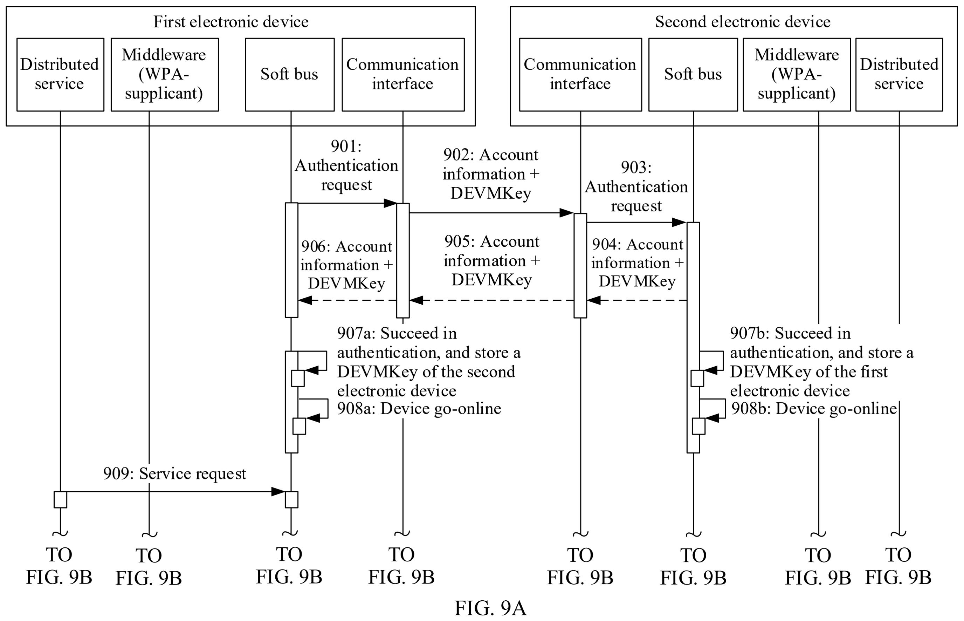

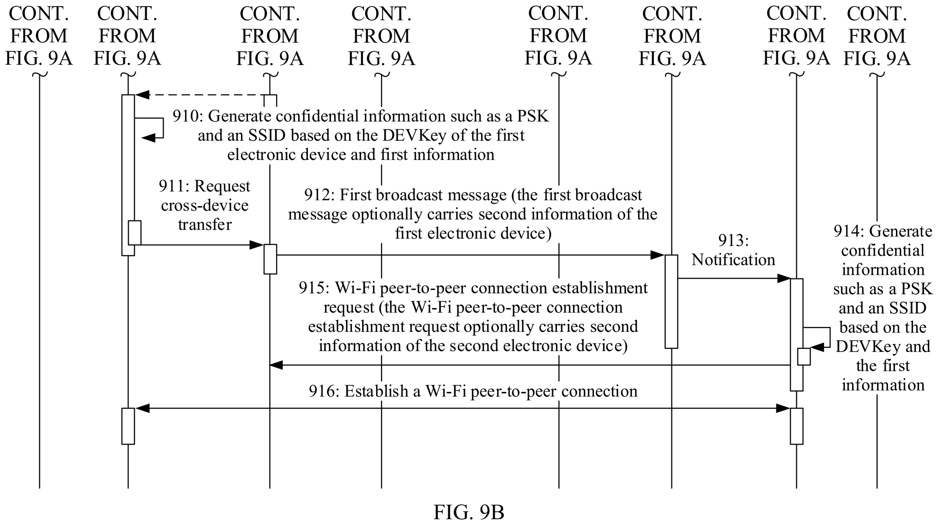

In this embodiment of this application, device discovery may be performed by using a plurality of discovery means (for example, BLE discovery, local area network discovery, Wi-Fi P2P discovery, broadcast discovery, USB discovery, and near field communication (near field communication, NFC)), thereby improving universality. For example, if the local area network discovery means is used to perform device discovery, the first electronic device and the second electronic device may exchange information by using a router; and if the broadcast discovery means is used to perform device discovery, the first electronic device and the second electronic device may exchange information through broadcast (for example, BLE broadcast, BR broadcast, or Wi-Fi broadcast). For an example of a specific implementation of the device discovery phase, refer to related steps in FIG. 9A and FIG. 9B.

In the foregoing implementation, in a process of establishing the Wi-Fi peer-to-peer connection between the first electronic device and the second electronic device, no signaling connection of a type such as a Bluetooth connection is established, a Wi-Fi peer-to-peer channel is quickly negotiated based on BLE broadcast, another type of broadcast, a simple single-peer interaction notification, or the like, and information such as a PSK required for the Wi-Fi peer-to-peer connection is quickly calculated by using an existing trusted key (for example, a device master key), which avoids overheads of transferring the PSK through a signaling channel such as Bluetooth. Therefore, compared with an implementation in which a signaling connection needs to be established and the confidential information and the second information that are used to establish the Wi-Fi peer-to-peer connection are transmitted based on the signaling connection, the foregoing implementation of this embodiment of this application can reduce a delay in establishing a signaling connection and exchanging information based on the signaling connection, thereby reducing a delay in establishing the Wi-Fi peer-to-peer connection, and enabling the distributed service to quickly establish the Wi-Fi peer-to-peer connection through broadcast.

The following describes this embodiment of this application by using an implementation process of the procedure shown in FIG. 6 in a specific application scenario as an example. The application scenario is as follows: Based on the architecture shown in FIG. 1, the user performs an operation on the mobile phone 11 (the first electronic device) to implement file sharing with the large-screen device 13 (the second electronic device). For a signaling interaction procedure between the mobile phone and the large-screen device, refer to FIG. 9A and FIG. 9B.

As shown in FIG. 9A and FIG. 9B, the procedure may include the following steps.

Step 901: A soft bus of the mobile phone sends an authentication request to a communication interface of the electronic device, where the authentication request includes a DEVMKey and account information of the mobile phone. Further, the authentication request may further include information such as a MAC address of the mobile phone.

In this step, for example, for an electronic device that supports the HiChain protocol, a communication interface of the electronic device may be a HiChain interface. The HiChain mechanism is a protocol mechanism used to implement device interconnection security in OpenHarmony.

Step 902: The communication interface of the mobile phone sends information such as the DEVMKey of the mobile phone, where the information is received by the large-screen device.

Optionally, the DEVMKey and the account information of the mobile phone are encrypted, and a used key is a key shared between the first electronic device and the second electronic device.

Optionally, the mobile phone may send a broadcast message, where the broadcast message includes information such as the DEVMKey and the account information of the mobile phone. Optionally, the broadcast message may be a Bluetooth low energy broadcast message.

Step 903: A communication interface of the large-screen device sends information such as the DEVMKey of the mobile phone to a soft bus of the large-screen device by using an authentication request.

Step 904: The soft bus of the large-screen device sends a DEVMKey and account information of the large-screen device to the communication interface, where information such as a MAC address of the large-screen device may be further included.

Step 905: The communication module of the large-screen device sends information such as the DEVMKey of the large-screen device, where the information is received by the mobile phone.

Optionally, the DEVMKey and the account information of the large-screen device are encrypted, and a used key is a key shared between the first electronic device and the second electronic device.

Optionally, the large-screen device may send a broadcast message, where the broadcast message includes information such as the DEVMKey of the large-screen device. Optionally, the broadcast message may be a Bluetooth low energy broadcast message.

Step 906: The communication interface of the mobile phone sends information such as the DEVMKey of the large-screen device to the soft bus of the mobile phone.

Step 907a and step 907b: The soft bus of the mobile phone authenticates the large-screen device, adds the large-screen device to a list of trusted devices, and stores information such as the DEVMKey of the large-screen device after the authentication succeeds; and the soft bus of the large-screen device authenticates the mobile phone, and after the authentication succeeds, adds the mobile phone to a list of optional devices, and stores information such as the DEVMKey of the mobile phone.

Optionally, if the account information of the large-screen device is equal to the account information of the mobile phone, the mobile phone succeeds in authenticating the large-screen device. If the account information of the mobile phone is equal to the account information of the large-screen device, the large-screen device succeeds in authenticating the mobile phone.

Step 908a and step 908b: The mobile phone and the large-screen device go online respectively.

In this case, device authentication is completed in a device discovery process. Further, the mobile phone and the large-screen device further obtain information such as a MAC address of a peer device.

Step 909: An application on the mobile phone sends a service request to the soft bus of the mobile phone in response to a user operation that a user requests to perform file sharing with the large screen, and the soft bus triggers middleware based on the service request. For a related user interface for performing the operation that the user requests to perform file sharing with the large-screen device, refer to FIG. 7a to FIG. 7d.

Step 910: The middleware in the mobile phone generates confidential information based on the DEVMKey of the first electronic device and first information, for example, the confidential information includes a PSK and an SSID. For a specific generation method, refer to the foregoing embodiment.

Step 911: The middleware in the mobile phone requests the soft bus to perform cross-device transfer.

Step 912: The soft bus in the mobile phone sends a first broadcast message, where the first broadcast message is received by the large-screen device.

Optionally, the first broadcast message includes a MAC address of the large-screen device. The first broadcast message is used to trigger the large-screen device to generate confidential information and establish a Wi-Fi peer-to-peer connection.

Optionally, the first broadcast message includes second information of the mobile phone.

Optionally, the first broadcast message may further include a first verification code generated by the mobile phone.

For a specific implementation of this step, refer to the foregoing embodiment.

Step 913: The soft bus in the large-screen device notifies middleware in the large-screen device to generate confidential information, for example, the confidential information includes a PSK and an SSID. For a specific generation method, refer to the foregoing embodiment.

Optionally, if the first broadcast message includes the first verification code, the large-screen device further needs to generate a second verification code, and compares whether the first verification code is the same as the second verification code. If the first verification code is the same as the second verification code, the verification succeeds, and then the confidential information is generated. For a specific implementation, refer to the foregoing embodiment.

Step 914: The middleware in the large-screen device generates confidential information based on the DEVMKey of the GO device and first information, for example, the confidential information includes a PSK and an SSID. The confidential information generated by the large-screen device is the same as the confidential information generated by the mobile phone.

Step 915: The large-screen device sends a Wi-Fi peer-to-peer connection establishment request to the mobile phone.

Optionally, the Wi-Fi peer-to-peer connection establishment request includes second information of the large-screen device.

Optionally, the large-screen device may send the Wi-Fi peer-to-peer connection establishment request through broadcast such as BLE broadcast, BR broadcast, or Wi-Fi broadcast.

Step 916: Establish a Wi-Fi peer-to-peer connection between the mobile phone and the large-screen device.

In the foregoing procedure, in a possible implementation of step 915 and step 916, after receiving the first broadcast message, the large-screen device determines a Wi-Fi peer-to-peer connection manner based on the generated confidential information (such as the PSK and the SSID), the second information of the mobile phone, and the second information of the device. For example, the large-screen device may determine, based on information of the mobile phone such as a Wi-Fi station channel, a supported channel list, and whether wideband is supported, a frequency on which the GO device finally establishes the connection, and create a Wi-Fi peer-to-peer group. The large-screen device sends a Wi-Fi peer-to-peer connection establishment request to the mobile phone, where the Wi-Fi peer-to-peer connection establishment request may include: a frequency on which the Wi-Fi peer-to-peer group is established, role assignment of the GC device and the GO device, an SSID of the Wi-Fi peer-to-peer group, a MAC address or an IP address and a port number of the mobile phone, and the like. The mobile phone creates a Wi-Fi peer-to-peer group based on the received Wi-Fi peer-to-peer connection establishment request. After the Wi-Fi peer-to-peer group is created on the mobile phone and the large-screen device, an application on the mobile phone and an application on the large-screen device establish a transmission channel that is based on the Wi-Fi peer-to-peer connection, and the application on the mobile phone starts to transmit data to the application on the large-screen device through the transmission channel that is based on the Wi-Fi peer-to-peer connection.

It may be understood that, to implement functions in the foregoing embodiments, the communication apparatus includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

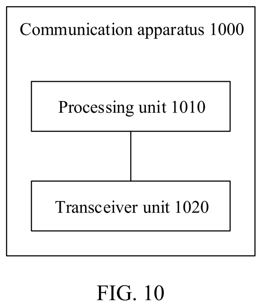

FIG. 10 is a diagram of a possible structure of a communication apparatus according to an embodiment of this application. The communication apparatuses may be configured to implement functions of the terminal device or the network device in the foregoing method embodiments, and therefore can also implement the beneficial effects in the foregoing method embodiments. In this embodiment of this application, the communication apparatus may be one of the mobile phone 11, the tablet computer 12, and the large-screen device 13 that are shown in FIG. 1, or another electronic device, or may be a module (for example, a chip) applied to the foregoing electronic device.

As shown in FIG. 10, a communication apparatus 1000 includes a processing unit 1010 and a transceiver unit 1020. The communication apparatus 1000 is configured to implement functions of the electronic device in the method embodiment shown in FIG. 6 or FIG. 9A and FIG. 9B.

When the communication apparatus 1000 is configured to implement the function of the first electronic device in the method embodiment shown in FIG. 6, the processing unit 1010 determines to establish a Wi-Fi peer-to-peer connection to a second electronic device, generates confidential information based on a device master key and first information, and sends a first broadcast message by using the transceiver unit 1020, where the confidential information is used to establish the Wi-Fi peer-to-peer connection, the first information includes time information and/or a connection count of establishing the Wi-Fi peer-to-peer connection between the first electronic device and the second electronic device, and the first broadcast message is used to notify the second electronic device to establish the Wi-Fi peer-to-peer connection to the first electronic device. The transceiver unit 1020 receives second information of the second electronic device, where the second information is used to establish the Wi-Fi peer-to-peer connection. The processing unit 1010 establishes the Wi-Fi peer-to-peer connection to the second electronic device based on the confidential information, second information of the first electronic device, and the second information of the second electronic device.

When the communication apparatus 1000 is configured to implement the function of the second electronic device in the method embodiment shown in FIG. 6, the transceiver unit 1020 receives a first broadcast message, where the first broadcast message is used to notify the second electronic device to establish a Wi-Fi peer-to-peer connection to a first electronic device, the first broadcast message includes second information of the first electronic device, and the second information is used to establish the Wi-Fi peer-to-peer connection. The processing unit 1010 generates confidential information based on a device master key and first information, where the confidential information is used to establish the Wi-Fi peer-to-peer connection, and the first information includes time information and/or a connection count of establishing the Wi-Fi peer-to-peer connection between the first electronic device and the second electronic device. The processing unit 1010 establishes the Wi-Fi peer-to-peer connection to the first electronic device based on the confidential information, second information of the second electronic device, and the second information of the first electronic device.

For more detailed descriptions of the processing unit 1010 and the transceiver unit 1020, directly refer to related descriptions in the method embodiment shown in FIG. 6 or FIG. 9A and FIG. 9B. Details are not described herein again.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the network device or the terminal. The processor and the storage medium may alternatively exist in the network device or the terminal as discrete components.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A Wi-Fi peer-to-peer connection establishment method, applied to a first electronic device, wherein the method comprises:
determining to establish a Wi-Fi peer-to-peer connection to a second electronic device;
generating confidential information based on a device master key and first information, and sending a first broadcast message, wherein the confidential information is used to establish the Wi-Fi peer-to-peer connection, the first information comprises time information and/or a connection count of establishing the Wi-Fi peer-to-peer connection between the first electronic device and the second electronic device, and the first broadcast message is used to notify the second electronic device to establish the Wi-Fi peer-to-peer connection to the first electronic device;
receiving second information that is of the second electronic device and that is broadcast by the second electronic device; and
establishing the Wi-Fi peer-to-peer connection to the second electronic device based on the confidential information, second information of the first electronic device, and the second information of the second electronic device.

2. The method according to claim 1, wherein the first broadcast message comprises the second information of the first electronic device.

3. The method according to claim 2, wherein the second information of the first electronic device comprises one or more of the following: Wi-Fi peer-to-peer connection status information of the first electronic device, device role information of the first electronic device, station STA channel information of the first electronic device, a channel list supported by the first electronic device, dual-band dual-concurrent capability information of the first electronic device, an address network segment of the first electronic device, an IP address of the first electronic device, a type of the first electronic device, and a battery level of the first electronic device.

4. The method according to any one of claims 1 to 3, wherein the second information of the second electronic device comprises one or more of the following: Wi-Fi peer-to-peer connection status information of the second electronic device, device role information of the second electronic device, station STA channel information of the second electronic device, indication information of a channel selected by the second electronic device, dual-band dual-concurrent capability information of the second electronic device, an address network segment of the second electronic device, an IP address of the second electronic device, a type of the second electronic device, and a battery level of the second electronic device.

5. The method according to any one of claims 1 to 4, wherein receiving the second information that is of the second electronic device and that is broadcast by the second electronic device comprises:
receiving a second broadcast message sent by the second electronic device, wherein the second broadcast message comprises indication information, and the indication information indicates that the first electronic device is a group manager device.

6. The method according to claim 5, wherein after receiving the second broadcast message, the method further comprises:
sending a Wi-Fi peer-to-peer connection establishment request to the second electronic device.

7. The method according to any one of claims 1 to 6, wherein receiving the second information that is of the second electronic device and that is broadcast by the second electronic device comprises:
receiving a Wi-Fi peer-to-peer connection establishment request from the second electronic device, wherein the Wi-Fi peer-to-peer connection establishment request comprises the second information of the second electronic device.

8. The method according to any one of claims 1 to 7, wherein sending the first broadcast message comprises:
generating a first verification code based on the device master key and the connection count; and
sending the first broadcast message, wherein the first broadcast message comprises the first verification code.

9. The method according to any one of claims 1 to 8, wherein the confidential information comprises a pre-shared key PSK and a service set identifier SSID.

10. A Wi-Fi peer-to-peer connection establishment method, applied to a second electronic device, wherein the method comprises:
receiving a first broadcast message, wherein the first broadcast message is used to notify the second electronic device to establish a Wi-Fi peer-to-peer connection to a first electronic device, and the first broadcast message comprises second information of the first electronic device;
generating confidential information based on a device master key and first information, wherein the confidential information is used to establish the Wi-Fi peer-to-peer connection, and the first information comprises time information and/or a connection count of establishing the Wi-Fi peer-to-peer connection between the first electronic device and the second electronic device; and
establishing the Wi-Fi peer-to-peer connection to the first electronic device based on the confidential information, second information of the second electronic device, and the second information of the first electronic device.

11. The method according to claim 10, wherein the second information of the first electronic device comprises one or more of the following: Wi-Fi peer-to-peer connection status information of the first electronic device, device role information of the first electronic device, station STA channel information of the first electronic device, a channel list supported by the first electronic device, dual-band dual-concurrent capability information of the first electronic device, an address network segment of the first electronic device, an IP address of the first electronic device, a type of the first electronic device, and a battery level of the first electronic device.

12. The method according to either of claims 10 and 11, wherein after receiving the first broadcast message, the method further comprises:
broadcasting the second information of the second electronic device.

13. The method according to any one of claims 10 to 12, wherein the second information of the second electronic device comprises one or more of the following: Wi-Fi peer-to-peer connection status information of the second electronic device, device role information of the second electronic device, station STA channel information of the second electronic device, indication information of a channel selected by the second electronic device, dual-band dual-concurrent capability information of the second electronic device, an address network segment of the second electronic device, an IP address of the second electronic device, a type of the second electronic device, and a battery level of the second electronic device.

14. The method according to either of claims 12 and 13, wherein broadcasting the second information of the second electronic device comprises:
sending a second broadcast message, wherein the second broadcast message comprises indication information, and the indication information indicates that the first electronic device is a group manager device.

15. The method according to claim 14, wherein after sending the second broadcast message, the method further comprises:
receiving a Wi-Fi peer-to-peer connection establishment request sent by the first electronic device.

16. The method according to either of claims 10 and 11, wherein after generating the confidential information based on the device master key and the first information, the method further comprises:
sending a Wi-Fi peer-to-peer connection establishment request to the first electronic device, wherein the Wi-Fi peer-to-peer connection establishment request comprises the second information of the second electronic device.

17. The method according to any one of claims 10 to 16, wherein the first broadcast message comprises a first verification code generated by the first electronic device; and
before generating the confidential information based on the device master key and the first information, the method further comprises:
generating a second verification code based on the device master key and the connection count; and
succeeding in verifying the first electronic device based on the first verification code and the second verification code.

18. The method according to any one of claims 10 to 17, wherein the confidential information comprises a pre-shared key PSK and a service set identifier SSID.

19. A communication apparatus, comprising a unit or a module configured to perform the method according to any one of claims 1 to 9, or comprising a unit or a module configured to perform the method according to any one of claims 10 to 18.

20. A communication apparatus, comprising one or more processors and one or more memories, wherein the one or more memories store one or more programs, and when the program is executed by the one or more processors, the apparatus is enabled to perform the method according to any one of claims 1 to 9, or perform the method according to any one of claims 10 to 18.

21. A readable storage medium, comprising a computer program, wherein when the computer program is run on an apparatus, the apparatus is enabled to perform the method according to any one of claims 1 to 9, or perform the method according to any one of claims 10 to 18.

22. A computer program product, wherein when the computer program product is run on an apparatus, the apparatus is enabled to perform the method according to any one of claims 1 to 9, or perform the method according to any one of claims 10 to 18.

23. A chip system, comprising a processor, wherein after the processor invokes a computer program from a memory and runs the computer program, an apparatus on which the chip system is installed is enabled to perform the method according to any one of claims 1 to 9, or perform the method according to any one of claims 10 to 18.
